# EUROPEAN PATENT APPLICATION

(11) **EP 1 564 998 A2**
(43) Date of publication of application: **17.08.2005**
(21) Application number: 05002974.3
(22) Date of filing: 11.02.2005
(51) Int. Cl.: H04N 7/26

(54) **Memory management method, image processing apparatus, and memory management program**

(30) Priority: 17.02.2004 JP 2004040177
(71) Applicant: SONY CORPORATION, Tokyo (JP)
(72) Inventor: Okada, Tetsuya, Shinagawa-ku, Tokyo (JP)
(74) Representative: Müller - Hoffmann & Partner

(57) **Abstract**

When encoding and decoding are concurrently executed by sharing one image memory, the present invention is able to flexibly cope with a situation in which a change occurs in the image size subject to processing. A memory allocation processing block receives information about the image size and the number of images that are specified for each of encoding and decoding, individually allocates the memory areas corresponding to the specified image size by allocating these memory areas to the free area in the image memory in the number equivalent to the number of images, and outputs the addresses of the allocated memory areas. A memory area management block holds memory area information in which the correlation between the identification information of each allocated memory area and the access information for accessing each memory area and receives the requests from the encoder and the decoder for using the allocated memory areas and returning the used memory areas, thereby managing the use status of each memory area on the basis of the memory area information.

## Description

### BACKGROUND OF THE INVENTION

The present invention relates to a memory management method, an image processing apparatus based on this memory management method, and a memory management program for concurrently executing processes by a plurality of image processing section by sharing one image memory between these image processing section.

Recent advancement in image compression technologies such as MPEG (Moving Picture Experts Group) makes it a general practice to digitize image signals and handle digital image signals. For example, digital video cameras for taking moving images and recording them as digital data are in wide use.

Some recently developed digital video cameras have two kinds of recording media, for example, the magnetic tape and the memory card comprised of the removable semiconductor memory, in one body. May of these digital video cameras have a function of concurrently executing the encoding and decoding of moving image and the two lines of encoding and decoding.

For example, some digital video cameras are capable of recording a moving image being taken to different recording media with different image sizes, different compression ratios, and different formats. In this case, two lines encoding of moving images having different image sizes are concurrently executed. Some other digital video cameras have a function of decoding a moving image recorded to magnetic tape and encoding it again by making its image size smaller, recording the encoded moving image to semiconductor memory card. In this case, decoding and encoding are executed concurrently.

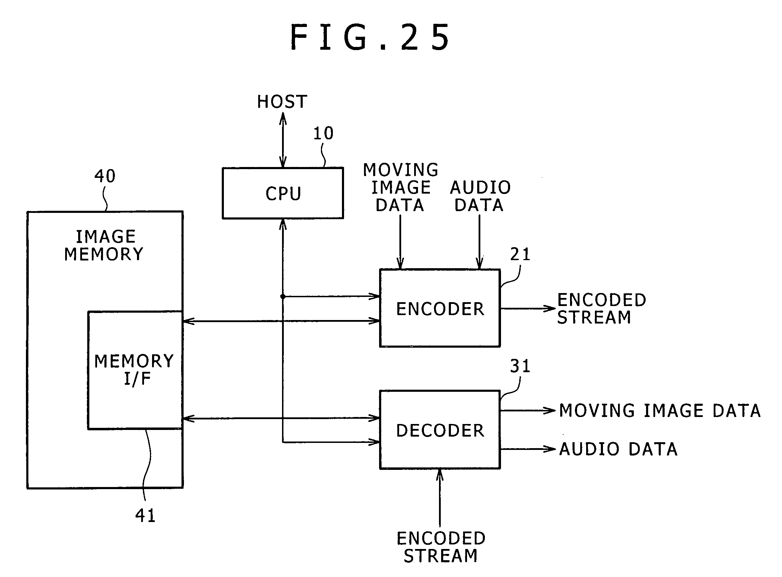

Referring to FIG. 25, there is illustrated, as one example, an exemplary configuration of the main portion of an image processing apparatus capable of concurrently executing the encoding and decoding of moving images.

The image processing apparatus shown in FIG. 25 is arranged, for example, in image recording/reproducing apparatuses or imaging apparatuses each having a function of encoding inputted moving image data or audio data with a data compression encoding system such as MPEG and recording the compressed data to various kinds of recording media, and a function of decoding data recorded to recording media to reproducibly output decoded moving image data or audio data. The shown image processing apparatus is adapted to concurrently encode and decode moving image data and audio data, which are executed by a system having no OS (Operating System), or so-called embedded system.

As shown in FIG. 25, this image processing apparatus has a CPU 11 for controlling encoding and decoding operations, an encoder 21, a decoder 31, and an image memory 40 that is shared between the encoder 21 and the decoder 31 for the temporary storage of the image data under processing.

The CPU 11 communicates with an external host controller and controls the operations of the encoder 21 and decoder 31 in accordance with the information supplied from this host controller. To be more specific, receiving encode and decode commands and the information such as the size of image to be created, and the number of memory areas to be allocated from the host controller, the CPU 11 supplies these commands information to the encoder 21 and the decoder 31 to start their operations.

The encoder 21 compresses the inputted moving image or audio digital data on the basis of a predetermined data compression encoding system such as MPEG to generate an encoded stream of moving image and audio data. The decoder 31 decompresses the inputted encode stream of moving image and audio data. The encoder 21 and the decoder 31 access the image memory 40 to temporarily store the moving image data in processing before encoding and decoding moving image data.

The image memory 40, constituted by a semiconductor memory such as SDRAM (Synchronous Dynamic Random Access Memory) for example, has incorporates a memory I/F 41 for interfacing the access made from the outside. The memory I/F 41 stores the image data supplied from the encoder 21 and the decoder 31 into a specified area in the image memory 40. The memory I/F 41 reads and outputs image data from the image memory 40 in accordance with the read address specified by the encoder 21 and the decoder 31.

When moving image data is encoded in the image processing apparatus as described above, the CPU 11 instructs the encoder 21 to start encoding on the basis of the information supplied from the host controller and, at the same time, specifies the image size and the number of images corresponding to a memory area to be allocated. Receiving the moving image data to be encoded, the encoder 21 allocates the memory area in which to store images to the image memory 40 in accordance with the information supplied from the CPU 11 and transmits the specification of the corresponding physical address to the memory I/F 41, starting an encoding operation by sequentially storing the image data in processing into the allocated memory area.

In decoding moving image data, the CPU 11 transmits the information such as image size and number of images to the decoder 31. Receiving an encoded stream, the decoder 31 allocates a memory area corresponding to the number of images specified by the CPU 11 in the image memory 40 and transmits the specification of the corresponding physical address to the memory I/F 41, starting a decoding operation by sequentially storing the image data in processing into the allocated memory area.

In encoding and decoding audio data, the encoder 21 and the decoder 31 sequentially process the inputted audio data and encoded stream in accordance with the information supplied from the host controller through the CPU 11. In this process, the audio data being processed may be temporarily stored in the image memory 40.

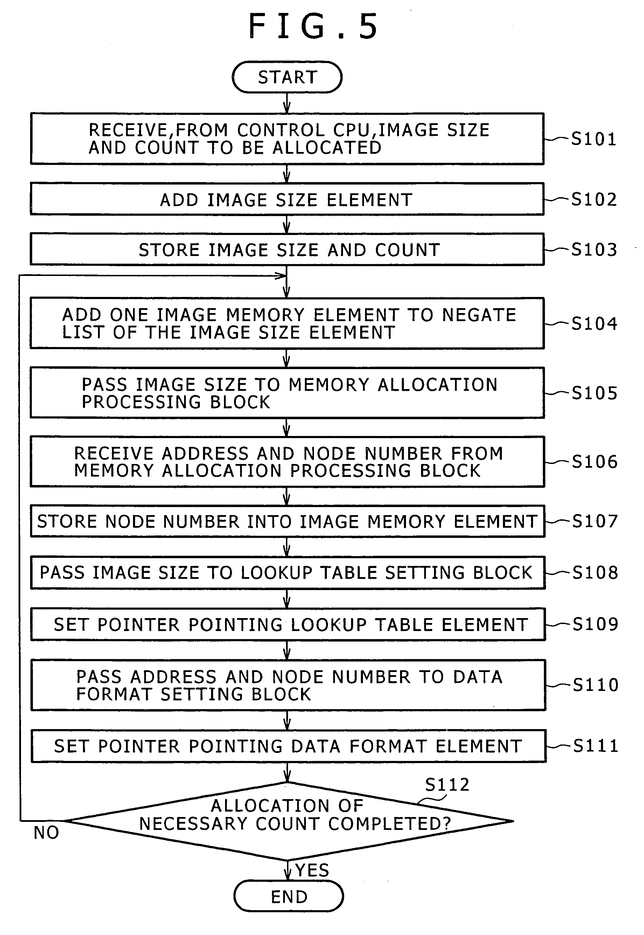

It should be noted that the following decoding apparatus is conventionally available that is able to concurrently execute the encoding of one line of data and the decoding of another line of data. Namely, in the related-art decoding apparatus, a reverse conversion circuit is arranged that is shared by the encoding and decoding of data. A signal inputted as a highly efficiently encoded image signal and passed through a variable-length decoding circuit and a dequantizing circuit and an inputted signal of another line are chosen by a multiplexing circuit to be inputted in a the reverse converting circuit. The former signal being decoded by the reverse conversion circuit is outputted and the latter image signal being encoded by the reverse conversion circuit is outputted through a quantization circuit and a variable-length encoding circuit. The reverse decoding circuit is operated twice as fast as the real time speed or higher to switch between the decoding function and the encoding faction of the reverse conversion circuit, thereby concurrently executing decoding processing and encoding processing (for example, refer to Japanese Patent Laid-open No. Hei 9-322121 (paragraphs 0029 through 0032, FIG. 5)).

Image recording/reproducing apparatuses having each a plurality of recording media are required to be able to change image sizes that are processed by the encoder or the decoder halfway in the recording or reproducing moving image data by use of these recording media. For example, with a digital video camera operating on the magnetic tape and the memory card, it is assumed that, while a taken image is being recording to both recording media, only the recording to the memory card be suspended to change image sizes of the image be recorded and then resumed.
with the related-art image processing apparatus shown in FIG. 25, however, the size of each memory area to be allocated by encoder 21 and the decoder 31 and the number of allocated memory areas are predetermined in accordance with image sizes subject to processing specified by the host controller through the CPU 11. Therefore, once the encoding or decoding has started, the memory area is allocated in the image memory 40 in a fixed manner, so that the image size settings cannot be changed unless both the encoding and decoding operations are suspended. Besides, the encoder 21 and the decoder 31 must manage the allocated memory areas by always recognizing their physical addresses, thereby complicating the memory area management after image sizes are changed, resulting in the inability to flexibly coping with each image size change operation.

### SUMMARY OF THE INVENTION

It is therefore an object of the present invention to provide a memory management method capable of flexibly coping with the change in the image size subject to processing when concurrently encoding and decoding image data by sharing one image memory.

It is another object of the present invention to provide an image processing apparatus capable of flexibly coping with the change in the image size subject to processing when concurrently encoding and decoding image data by sharing one image memory.

It is still another object of the present invention to provide a memory management program capable of flexibly coping with the change in the image size subject to processing when concurrently encoding and decoding image data by sharing one image memory.

In carrying out the invention and according to one aspect thereof, there is provided a memory management method for sharing one image memory as a work area by a plurality of image processing section to concurrently execute processing operations by the plurality of image processing section, including: memory area allocating step in which a memory area allocating section receives information about an image size and an image count that are individually specified for processing operations to be executed by the plurality of image processing section, allocates memory areas corresponding to the image size to a free area in the image memory by the image count, and outputs an address indicative of the allocated image area; memory area information generating step in which a memory area managing section generates memory area information in which a correlation between identification information of each of the memory areas allocated in the memory area allocating step and access information for accessing each of the memory areas, the access information at least including the address, is stored for each of the memory areas; and memory area managing step in which the memory area managing section receives requests from each of the plurality of image processing section for using and returning each of the memory areas to mange a use status of each of the memory areas on the basis of the memory area information.

In the above-mentioned memory management method, the memory areas corresponding to the specified image size are individually allocated by the specified number of images in the free area in the image memory in the memory area allocating step by the memory area allocating section, so that these memory areas are individually allocated in a distributed manner rather than in a fixed manner by the number of images. In the memory area information generating step by the memory area managing section, memory area information is generated in which the correlation between the identification information of each allocated memory area and the access information for accessing these allocated memory areas is stored for each memory area. Consequently, by specifying a number for identifying the memory area information, each image processing section is able to access the corresponding memory area for the reading or writing of image data. Moreover, in the memory area managing step by the memory area managing section, by receiving use and return requests from each image processing section corresponding to each memory area to manage the use status of each memory area on the basis of the memory area information, the image processing section need not manage the use status by recognizing the addresses in the corresponding image memory when using memory areas.

In carrying out the invention and according to another aspect thereof, there is provided an image processing apparatus for sharing one image memory as a work area by a plurality of image processing section to concurrently execute processing operations by the plurality of image processing section, including: memory area allocating section for receiving information about an image size and an image count that are individually specified for processing operations to be executed by the plurality of image processing section, allocating memory areas corresponding to the image size to a free area in the image memory by the image count, and outputting an address indicative of the allocated image area; and memory area managing section for holding memory area information in which a correlation between identification information of each of the memory areas allocated by the memory area allocating section and access information for accessing each of the memory areas, the access information at least including the address, is stored for each of the memory areas and receiving requests for using and returning of each of the memory areas from each of the plurality of image processing section, thereby managing a use status of each of the memory areas.

In the above-mentioned image processing apparatus, the memory areas corresponding to the specified image size are individually allocated by the specified number of images in the free area in the image memory in the memory area allocating section, so that these memory areas are individually allocated in a distributed manner rather than in a fixed manner by the number of images. In the memory area managing section, memory area information is generated in which the correlation between the identification information of each allocated memory area and the access information for accessing these allocated memory areas is stored for each memory area. Consequently, by specifying a number for identifying the memory area information, each image processing section is able to access the corresponding memory area for the reading or writing of image data. Moreover, in the memory area managing step by the memory area managing section, by receiving use and return requests from each image processing section corresponding to each memory area to manage the use status of each memory area on the basis of the memory area information, the image processing section need not manage the use status by recognizing the addresses in the corresponding image memory when using memory areas.

As described above and according to the invention, each of a plurality of image processing section is able to access a corresponding memory area to read or write image data by simply specifying memory area information without managing use status of each memory area by recognizing its address in an image memory. In addition, memory areas corresponding to image size are individually allocated in the image memory, so that, if a change occurs in the image size, the allocated areas are deallocated once to be set to free areas that are easily reused as memory areas having different image sizes. Consequently, if a change occurs in image size in a certain image processing section, the necessary memory areas can be allocated again for reuse without discontinuing the processing by another image processing section without increasing the processing load of each of the image processing section.

### BRIEF DESCRIPTION OF THE DRAWINGS

FIG. 1 is a block diagram illustrating an exemplary configuration of the main portion of an image processing apparatus practiced as a first embodiment of the invention;
FIG. 2 is a block diagram illustrating an exemplary internal configuration of a memory control block shown in FIG. 1;
FIG. 3 is a block diagram illustrating a method of managing an allocated memory area by a memory area management block shown in FIG. 2;
FIG. 4A illustrates a data structure of image size elements;
FIG. 4B illustrates a data structure of image memory elements;
FIG. 5 is a flowchart indicative of processing by the memory area management block in the allocation of a memory area;
FIG. 6 is a flowchart indicative of processing by the memory area management block in providing allocated memory area to an encoder or a decoder;
FIG. 7 is a flowchart indicative of processing by the memory area management block in returning an allocated memory area from the encoder or the decoder;
FIG. 8 is a flowchart indicative of processing by the memory area management block in deallocating the allocated memory area;
FIG. 9 illustrates an exemplary configuration of a lookup table;
FIG. 10 illustrates a method of managing a memory area by a lookup table setting block shown in FIG. 2;
FIG. 11 illustrates a data structure of lookup table elements;
FIG. 12 is a flowchart indicative of processing by the lookup table setting block in allocating a memory area;
FIG. 13 is a flowchart indicative of processing by the lookup table setting block in deallocating the allocated memory;
FIG. 14 illustrates an exemplary configuration of a data format;
FIG. 15 illustrates a method of managing a memory area by a data format setting block shown in FIG. 2;
FIG. 16 illustrates a data structure of data format elements;
FIG. 17 is a flowchart indicative of processing by the data format setting block in allocating a memory area;
FIG. 18 is a flowchart indicative of processing by the data format setting block in deallocating the allocated memory area;
FIG. 19 illustrates a method of allocating a memory area by a memory allocation block and a memory deallocation block shown in FIG. 2;
FIG. 20A and FIG. 20B illustrate a method of managing tree-structured nodes by the memory allocation block and the memory deallocation block;
FIG. 21 is a flowchart indicative of processing by the memory allocation block in allocating a memory area;
FIG. 22 is a flowchart indicative of processing by the memory deallocation block in deallocating the allocated memory area;
FIG. 23 is block diagram illustrating an exemplary configuration of the main portion of an image processing apparatus practiced as a second embodiment of the invention;
FIG. 24 is block diagram illustrating an exemplary configuration of the main portion of an image processing apparatus practiced as a third embodiment of the invention; and
FIG. 25 is a block diagram illustrating a configuration of a related-art image processing apparatus capable of concurrently executing encoding and decoding of moving image data.

### DETAILED DESCRIPTION OF THE PREFERRED EMBODIMENTS

The following describes embodiments of the present invention in detail with reference to accompanying drawings.

### [The configuration of a first embodiment]

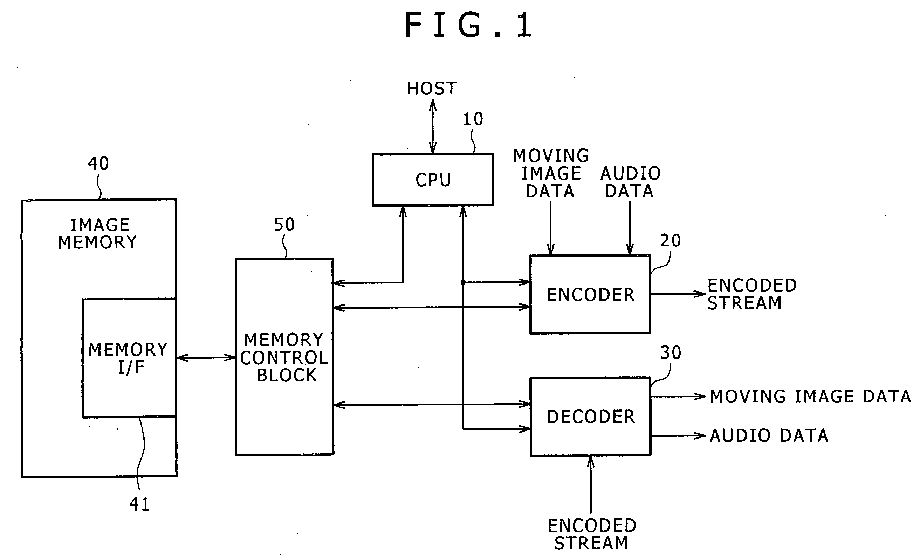

With the first embodiment, an example is assumed in which the present invention be applied to an image processing apparatus that encodes and decodes moving image and audio signals in accordance with a predetermined data compression encoding system. Now, referring to FIG. 1, there is shown an exemplary configuration of the main portion of an image processing apparatus practiced as the first embodiment of the invention.

The image processing apparatus shown in FIG. 1 is arranged in an image recording/reproducing apparatus or an imaging apparatus having a function of encoding inputted moving image data and audio data by a data compression encoding system such as MPEG to record the encoded data to various types of recording media and a function of decoding data recorded to various types of recording media to reproducibly output decoded moving image data and audio data, for example. This image processing apparatus is adapted to concurrently encode and decode moving image data and audio data, which are executed by a system having no OS (Operating System), or so-called embedded system.

As shown in FIG. 1, this image processing apparatus has a CPU 10 for controlling encoding and decoding operations, an encoder 20, a decoder 30, an image memory 40 shared by the encoder 20 and the decoder 30 for temporarily storing image data being processed, and a memory control block 50 for controlling access to the image memory 40.

The CPU 10 communicates with an external host controller to control the operations of the encoder 20, the decoder 30, and the memory control block 50 in accordance with the control information supplied by this host controller. To be more specific, the CPU 10 transmits information including the image size and the number of memory areas to be allocated for example specified by the host controller to the memory control block 50 and, at the same time, instructs the encoder 20 and the decoder 30 to execute encoding and decoding with is specified image size, for example. Also, the CPU 10 transmits requests received from the encoder 20 and the decoder 30 for reading data from or writing data to the image memory 40 to the memory control block 50 to transfer identifier ID indicative of the memory area to which image data has been written between the encoder 20 and the decoder 30 and memory control block 50.

The encoder 20 compresses the inputted digital moving image data and digital audio data in accordance with a predetermined data compression encoding system as MPEG, thereby generating encoded streams of moving image data and audio data. The decoder 30 decompresses the encoded streams of inputted moving image data and audio data. In encoding and decoding moving image data, the encoder 20 and the decoder 30 accesses the image memory 40 through the memory control block 50 to temporarily store the image data being processing into the image memory 40.

The image memory 40, made up of a SDRAM for example, incorporates a memory I/F 41 for interfacing the access made from the outside. The memory I/F 41 provides the hardware interface of the image memory 40 to the memory control block 50 and, receiving address and image size information from the memory control block 50, stores the image data supplied from the encoder 20 and the decoder 30 through the memory control block 50 into a corresponding memory area in the image memory 40. Also, the memory I/F 41 reads the image data from a memory area specified by the memory control block 50 and outputs the image data to the encoder 20 and the decoder 30 through the memory control block 50. It should be noted that the memory I/F 41 controls the reading and writing of data from and to the image memory 40 by use of a lookup table and a data format, which will be described later.

The memory control block 50 manages, in a unified manner, the accesses to the image memory 40 from the encoder 20 and the decoder 30. In encoding and decoding, the memory control block 50 receives the information such as the image size and the number of memory areas to be allocated from the CPU 10 and, on the basis of this information, allocates memory areas in the image memory 40. The memory control block 50 then stores the image data supplied from the encoder 20 and the decoder 30 into allocated memory areas in the image memory 40 and transmits the information of the identifier IDs indicative of the memory areas to the encoder 20 and the decoder 30 through the CPU 10. When an identifier ID is specified from the encoder 20 and the decoder 30 through the CPU 10, the memory control block 50 reads the image data from the specified memory area in the image memory 40 and outputs the image data to the encoder 20 and the decoder 30.

In encoding moving image data in the image processing apparatus as described above, the CPU 10 instructs the encoder 20 to start encoding on the basis of the information given from the host controller and, at the same time provides, to the memory control block 50, the information such as the image size and the number of images corresponding to memory areas to be allocated. In accordance with the information given by the CPU 10, the memory control block 50 allocates memory areas necessary for encoding to the image memory 40.

Receiving moving image data, the encoder 20 encodes the received moving image data by temporarily stores the image data being processing into the image memory 40 through the memory control block 50 or by appropriately reading the image data from the image memory 40. In storing the image data, a request is transmitted from the encoder 20 to the memory control block 50 through the CPU 10. In response to this request, the memory control block 50 writes the image data received from the encoder 20 to one of the allocated memory areas and transmits the identifier ID indicative of that memory area to the encoder 20 through the CPU 10.

Next, in reading the image data from the image memory 40, the encoder 20 transmits the identifier ID corresponding to the image data to be read to the memory control block 50 through the CPU 10. In response, the memory control block 50 reads the specified image data from the memory area identified by the received identifier ID in the image memory 40 and outputs the image data to the encoder 20. When a request comes from the host controller for ending the encoding, the memory control block 50 deallocates the memory areas allocated for encoding, thereby making these memory areas available for the writing of other data.

The same operation as above is executed in decoding moving image data. Namely, when decoding starts, memory areas necessary for decoding are allocated by the memory control block 50. The image data from the decoder 30 is stored in one of the allocated memory areas by the memory control block 50 and the identifier ID of that memory area is transmitted to the decoder 30. In reading the image data, the identifier ID is transmitted from the decoder 30 to the memory control block 50. In response, the memory control block 50 reads the image data from the memory area identified by the identifier ID and outputs the image data to the decoder 30.

Thus, in the above-mentioned image processing apparatus, the encoder 20 and the decoder 30 indirectly access the image memory 40 through the memory control block 50. The encoder 20 and the decoder 30 are able to request image data reading or writing by use of the identifier ID for each memory area allocated by the memory control block 50, rather than by use of the physical address of such memory area in the image memory 40.

On the other hand, every time one of the encoder 20 and the decoder 30 starts processing, the memory control block 50 allocates the memory areas necessary for the processing in the image memory 40. At this moment, the memory control block 50 efficiently allocates the memory areas to a free space in the image memory 40 by use of a binary tree structure with the unit memory area in the image memory 40 being a node and sets the allocated memory areas to the memory I/F 41 in match with the hardware I/F of the image memory 40.

Consequently, if the image size subject to processing in at least one of encoding and decoding is changed as instructed by the host controller, it is easily practicable to deallocate the memory area allocated for the changed processing, set the deallocated memory area to a free area, and reuse this free area as a memory area corresponding to the changed image size. This allows the memory control block 50 to control the memory areas according to image sizes in a unified manner, so that the encoder 20 and the decoder 30 can pass the image data being processing to each other without always recognizing the specifications and physical addresses of the image memory 40.

It should be noted that the image size subject encoding or decoding is changed when a change occurs in the image size of the image data that is temporarily stored in the image memory 40 during processing by the encoder 20 or the decoder 30. For example, at the time of encoding, the encoder 20 changes the image size of the inputted moving image data and then encodes the moving image data of the changed image size or encodes the inputted moving image data already changed in its image size, there changing the image size of the encoded stream to be generated. At the time of decoding, the image size of an encoded stream to be inputted in the decoder 30 is changed.

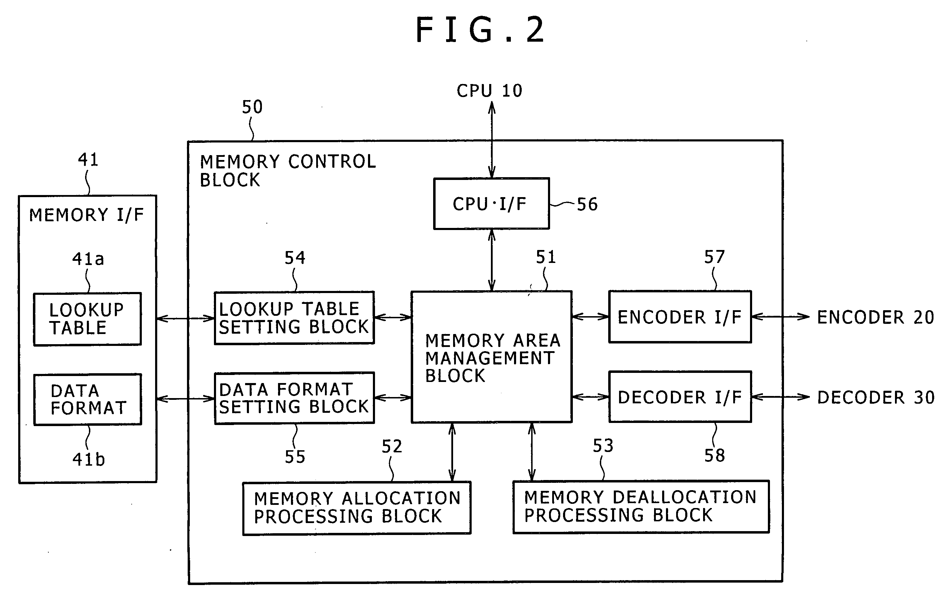

Referring to FIG. 2, there shown an exemplary internal configuration of the memory control block 50.

As shown in FIG. 2, the memory control block 50 has a memory area management block 51, a memory allocation processing block 52, a memory deallocation processing block 53, a lookup table setting block 54, a data format setting block 55, a CPU I/F 56, an encoder I/F 57, and a decoder I/F 58. It should be noted that FIG. 2 also shows a lookup table 41a and a data format 41b of the memory I/F 41 of the image memory 40 shown in FIG. 1.

The memory area management block 51 communicates with the CPU 10 through the CPU I/F 56 to control the entire operation of the memory control block 50. To be more specific, the memory area management block 51 requests the memory allocation processing block 52, the lookup table setting block 54, and the data format setting block 55 for the allocation of memory areas corresponding to the image size and the number of images specified by the CPU 10 and provides the allocated memory areas to the encoder 20 and the decoder 30 by use of the identifiers ID for identifying these memory areas, thereby managing the use states thereof. Also, the memory area management block 51 controls the data transfer between the encoder 20, the decoder 30, and the image memory 40. When encoding or decoding has been completed, the memory area management block 51 controls the memory deallocation processing block 53, the lookup table setting block 54, and the data format setting block 55 to deallocate the allocated memory areas.

The memory allocation processing block 52 allocates a memory area corresponding to the image size specified by the memory area management block 51 to a free area in the image memory 40 and computes the address thereof. To be more specific, the memory allocation processing block 52 manages the allocation state of each unit memory area by use of a binary tree structure with the unit memory area in the image memory 40 being a node. Next, the memory allocation processing block 52 extracts a memory area in which the data having the image size specified by the memory area management block 51 from the free area and outputs the start address of the extracted area to the memory area management block 51. The memory allocation processing block 52 deallocates the memory area specified by the memory area management block 51.

The lookup table setting block 54 and the data format setting block 55 set information in accordance with the access specifications of the image memory 40 such that the allocated memory area becomes ready for use. In the first embodiment, the start address of the memory area and the image size in which the data size of that memory area is represented in one-dimensional or two-dimensional data are specified to enable the reading or writing of the image memory 40. For this purpose, the memory I/F 41 has the lookup table 41a for holding the image size settings corresponding to memory area sizes and the data format 41b in which memory area start addresses are correlated with the elements in the lookup table 41a.

The lookup table setting block 54 sets an image size specified by the memory area management block 51 in allocating a memory area to the lookup table 41a of the memory I/F 41.

The data format setting block 55 sets the address computed by the memory allocation processing block 52 to the data format 41b of the memory I/F 41 and relates this address with the lookup table 41a. In reading or writing image data with the image memory 40 the data format setting block 55 specifies the corresponding element in the data format 41b in accordance with the information specified by the memory area management block 51, thereby requesting the memory I/F 41 for reading or writing the memory data.

The CPU I/F 56 interfaces information between the CPU 10 and the memory area management block 51. The encoder I/F 57 and the decoder I/F 58 interface image data between the encoder 20, and decoder 30, and the memory area management block 51.

### [Operation of the memory control block 50]

The following describes the operation of each component of the memory control block 50 in detail. First, a method of managing memory areas by the memory area management block 51 will be described.

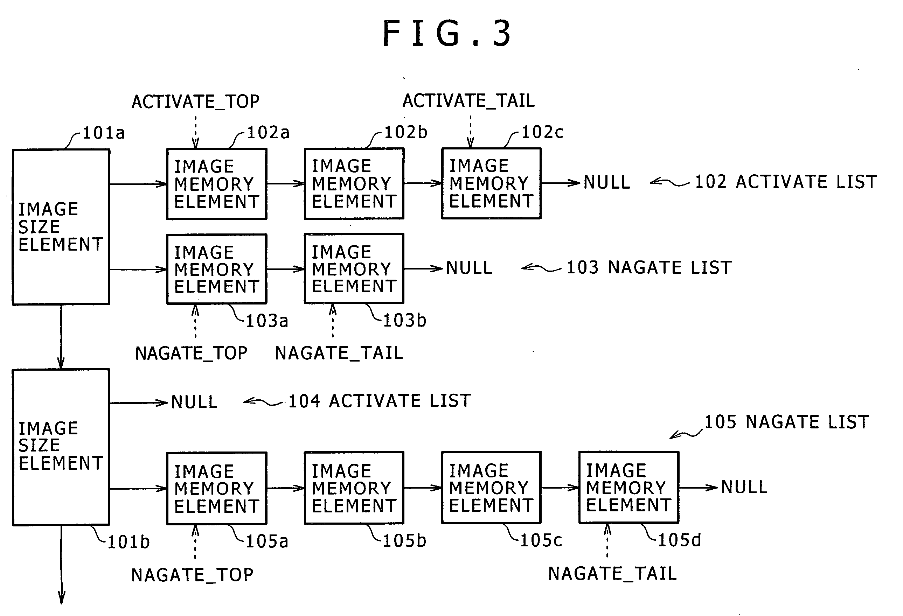

Referring to FIG. 3, there is shown a method of managing allocated memory areas by the memory area management block 51.

As shown in FIG. 3, the memory area management block 51 manages memory areas by use of a linear list in which two types of elements, image size element and image memory element, are connected with pointers.

The image size element is generated in correspondence to the execution of the processing by one encoder 20 or one decoder 30 and has a list structure in which image size elements generated later are pointed with pointers. One image size element has the number of image memory elements specified by the CPU 10 at the time of starting encoding or decoding, each of the image memory elements having the image size specified by the CPU at that moment. Namely, each image memory element corresponds to the memory area allocated for one picture of image data to be stored by the encoder 20 or the decoder 30 into the image memory 40.

In one image size element, image memory elements already stored with image data and image memory elements not yet stored with image data are connected to an activate list having a list structure having pointers and a negate list having a list structure having pointers, respectively. When the encoder 20 requests the writing of one picture of image data to the image memory 40, the top image memory element in the negate list is connected to the tail of the activate list and, when one picture of image data written to the image memory 40 becomes unnecessary any more, the image memory element concerned is connected to the tail of the negate list.

Each image size element manages each list by always recognizing activate_top and activate_tail indicative of the image memory elements at the top and tail of the activate list respectively and negate_top and negate_tail indicative of the image memory elements at the top and tail of the negate list respectively.

In the example shown in FIG. 3, two image size elements, an image size element 101a and an image size element 101b, are generated. In the first embodiment, since there are arranged one encoder 20 and one decoder 30, a maximum of two image size elements are generated.

For example, if the image size element 101a is generated for encoding, the memory areas corresponding to five image memory elements, 102a through 102c, 103a, and 103b are allocated for the processing by the encoder 20. Of these allocated memory areas, the memory areas corresponding to image memory elements 102a through 102c connected to the activate list 102 are already stored with the image data from the encoder 20 and the memory areas corresponding to the image memory elements 103a and 103b connected to the negate list 103 are in the unused state.

Likewise, if the image size element 101b is generated for decoding, the memory areas corresponding to four image memory elements 105a through 105d are allocated for the processing by the decoder 30. The activate list 104 contains no element and the memory areas corresponding to all the image memory elements 105a through 105d connected to the negate list 105 are in the unused state.

If the decoding by the decoder 30 ends with the state shown in FIG. 3, the image size element 101b and the image memory elements 105a through 105d thereof are all deleted. Consequently, the memory areas allocated for the processing by the decoder 30 are deallocated. To change the image size subject to processing by the decoder 30 during decoding from the state shown in FIG. 3, the image size element 101b is deleted once and the image size element having an image memory element set with a new image size is generated. While a setting change operation is on, the encoder 20 is able to continue its encoding by use of the memory area corresponding to the image memory element of the image size element 101a.

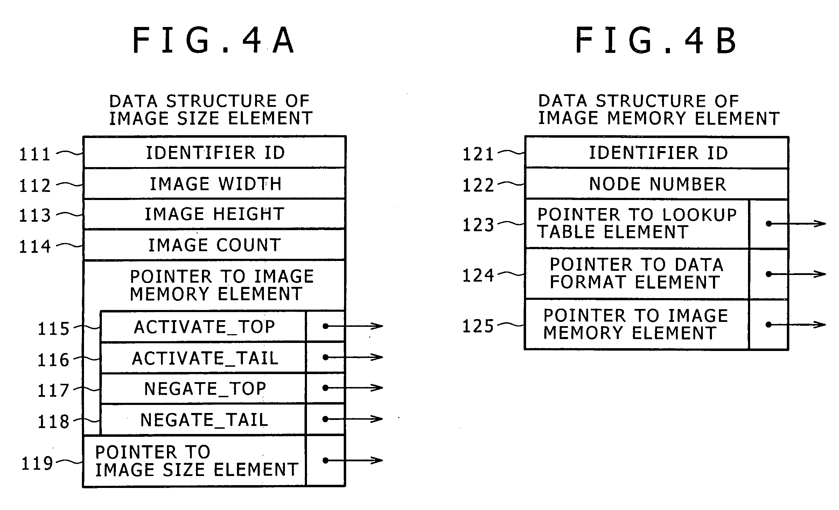

Referring to FIGS. 4A and 4B, there are shown data structures of image size element and image memory element.

Data as shown in FIG. 4A is set to each image size element by the memory area management block 51. An identifier ID 111 is a number unique to each image size element. Image width 112 and image height 113 are indicative of image sizes that are set to each image memory element of the image size element concerned and image count 114 is indicative of the number of image memory elements.

In order to manage the image memory elements of an image size concerned, pointers 115 through 118 pointing he image memory elements that are activate_top, activate_tail, negate_top, and negate_tail in the image size element concerned are set. For these pointers 115 through 118, the identifier IDs of image memory elements to be described later are used for example. In addition, pointer 119 to another image size element generated after the image size element concerned is set by the identifier ID of that image size element.

On the other hand, data as shown in FIG. 4B is set by the memory area management block 51 to each image memory element. An identifier ID 121 is a unique number for identifying each image memory element and is provided to the encoder 20 or the decoder 30 when image data is stored in the corresponding memory area. A node number 122 is indicative of a memory area allocated by the memory allocation processing block 52.

Also, in order to provide correlation with the actual memory areas to be allocated in the image memory 40, a pointer 123 pointing a lookup table element held in the lookup table setting block 54 and a pointer 124 pointing a data format element held in the data format setting block 55 are set. For these pointers 123 and 124, the identifier IDs of these elements are used. It should be noted that the lookup table element and the data format element will be described later.

In addition, a pointer 125 pointing an image memory element connected next in a same activate list or negate list is set by the identifier ID of that image memory element.

The following describes the processing to be executed by the memory area management block 51. Referring to FIG. 5, there is shown a flowchart indicative of the processing to be executed by the memory area management block 51 when memory areas are allocated.

### (Step S101)

When the host controller requests the CPU 10 to start encoding or decoding, the CPU 10 supplies the image size and the number of images corresponding to necessary memory areas specified by the host controller to the memory area management block 51 through the CPU I/F 56. The memory area management block 51 receives these pieces of information and starts the following processing.

### (Step S102)

A new image size element is added to the image size element list. At this moment, a value is set to the column of identifier ID 111 of the new image size element. If there is any already generated image size element, the identifier ID of the new image size element is stored in the column of the pointer 119 of that element.

### (Step S103)

For the new image size element, the image size supplied from the encoder 20 is stored in the columns of image width 112 and image height 113 and the number of images is stored in the column of image count 114. It should be noted that if image size is represented in one-dimensional data, that data may be stored only in the column of image width 112 for example.

### (Step S104)

One image memory element is added to the tail of the negate list of the newly generated image size element. At this moment, the pointer 118 pointing the negate_tail of the image size element is updated. If there is already an image size element in the negate list, the pointer 117 pointing the negate_top is updated and, at the same time, the identifier ID of the new image size element is set to the pointer 119 set to the image size element at the tail.

### (Step S105)

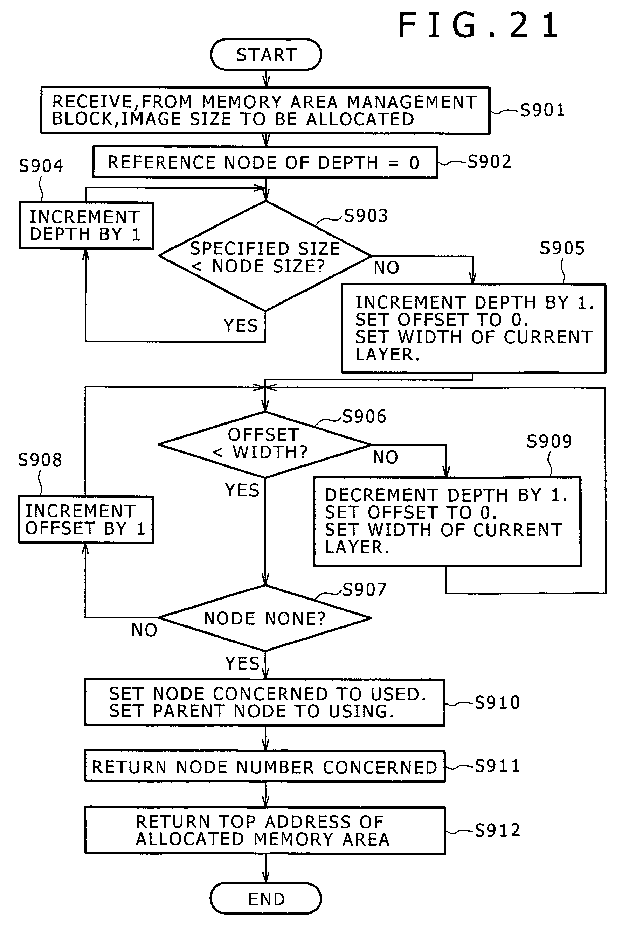

The image size received in step S101 is passed to the memory allocation processing block 52, requesting the allocation of a memory area corresponding to that image size. In response, the memory allocation processing block 52 allocates the memory area corresponding to the received image size in the image memory 40 and returns the binary tree structure node number indicative of that memory area and the start address of that memory area to the memory area management block 51, which will be described later with reference to FIG. 21.

### (Step S106)

The start address and the node number are received from the memory allocation processing block 52.

### (Step S107)

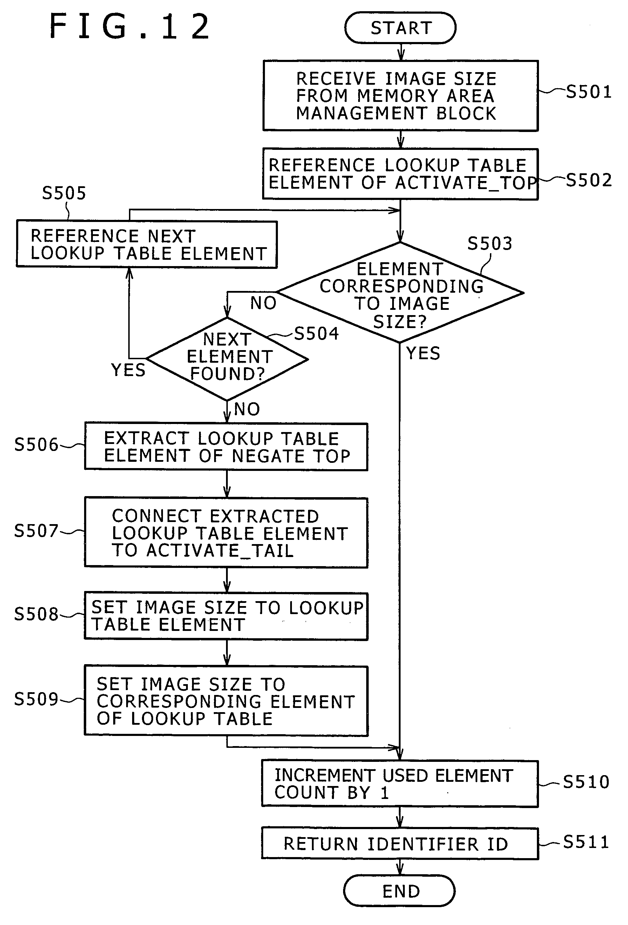

The node number received from the memory allocation processing block 52 is stored in the column of the node number 122 of the image memory element concerned, which will be described later with reference to FIG 12.

### (Step S108)

The image size specified by the CPU 10 is passed to the lookup table setting block 54. In response, the lookup table setting block 54 sets the image size to the lookup table 41a, updates the corresponding lookup table element, and returns the identifier ID of that element to the memory area management block 51.

### (Step S109)

The identifier ID is received from the lookup table setting block 54 and the received identifier ID is set as the pointer to 123 to the lookup table element.

### (Step S110)

The start address and the node number received from the memory allocation processing block 52 the identifier ID of the lookup table element received from the lookup table setting block 54, and a memory mapping type based on the image size are passed to the data format setting block 55. In response, the data format setting block 55 adds one data format element to a list indicative of use and sets data to the element of the data format 41b correlated to that element. Next, the identifier ID of that data format element is returned to the memory area management block 51.

### (Step S111)

The identifier ID is received from the data format setting block 55 and sets the received identifier ID as the pointer 124 pointing the data format element. By executing the above mentioned steps, the memory area corresponding to one image memory element is allocated.

### (Step S112)

Determination is made whether the memory areas enough for storing the number of images has been allocated. If the number of necessary memory areas are found allocated, the above mentioned processing ends. On the other hand, if the number of necessary memory areas is found not allocated, the procedure goes to step S104 to add a new image memory element to the tail of the negate list, thereby executing a process of allocating the memory area for this element.

Thus, the image memory elements equivalent to the number of images specified by the CPU 10 are generated in the negate list. Namely, the memory areas in the unused state (or the available memory areas) equivalent to the number images to be encoded or decoded have been allocated.

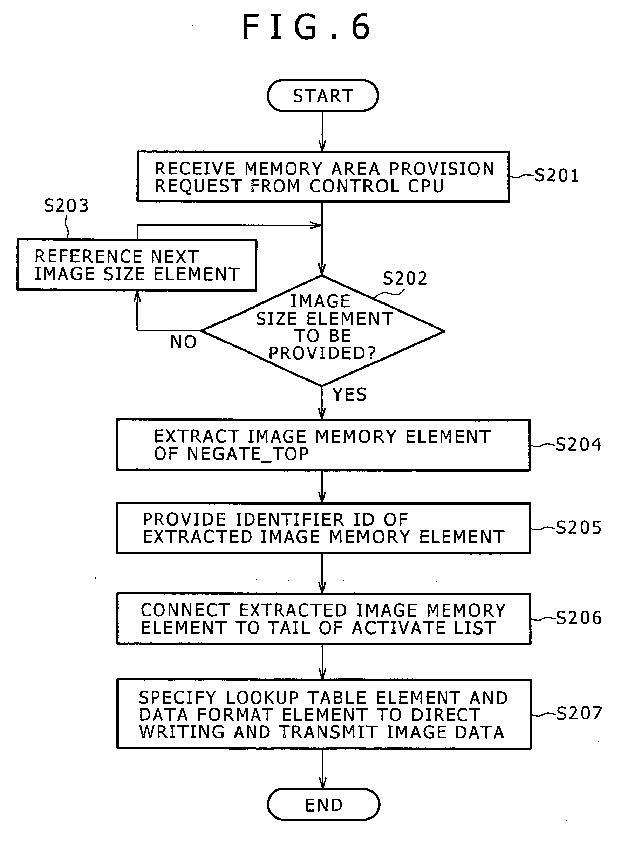

Referring to FIG. 6, there is shown a flowchart indicative of the processing to be executed by the memory area management block 51 for providing the allocated memory areas to the encoder 20 or the decoder 30.

### (Step S201)

The processing by the encoder 20 or the decoder 30 starts. When memory areas in which to temporarily store image data are required, the encoder 20 or the decoder 30 requests the memory control block 50 through the CPU 10 for the provision of memory areas. The memory area management block 51 receives this request from the CPU 10 and starts the following processing.

### (Step S202)

The list of image size elements is sequentially referenced from the top thereof to determine whether or not each image size element is to be provided, that is, corresponds to the encoder 20 or the decoder 30 that has requested memory areas. If an element is found not to be provided, the procedure goes to step S203; if an element is found to be provided, the procedure goes to step S204.

### (Step S203)

The image size elements in the list are referenced to execute the determination of step S202 above.

### (Step S204)

On the basis of the pointer 117 to the negate_top set to the image size element being referenced, the image memory element at the top of the negate list is extracted. To be more specific, the pointer 117 to the negate_top is updated such that the pointer 117 points the next image memory element in the negate list.

### (Step S205)

The identifier ID of the extracted image memory element is provided to the requesting encoder 20 or the decoder 30 through the CPU 10.

### (Step S206)

The extracted image memory element is connected to the tail of the activate list. To be more specific, the pointer 116 to the activate_tail is updated such that the pointer 116 points the new image memory element. If the extracted image memory element has already been connected the activate list, the pointer of the element connected to the tail pointing the next image memory element is updated such that this pointer points the new image memory element. As required, the pointer 115 to the activate_top is updated.

### (Step S207)

The image data is received from the requesting encoder 20 or the decoder 30. On the basis of the pointer 123 and the pointer 124 to the lookup table element and the data format element set to that image memory element, each element is specified to instruct the lookup table setting block 54 and the data format setting block 55 to write the image data and the received image data is transferred to the image memory 40. Consequently, the image data is written to the memory area corresponding to the new image memory element connected to the activate list.

Thus, the image data for one picture from the encoder 20 or the decoder 30 is written to the image memory 40. At this moment, the image memory element corresponding to the memory area in which the image data is written is connected to the activate list and to be ready for use.

Subsequently, the encoder 20 or the decoder 30 that has received the identifier ID of that image memory element supplies this identifier ID to the memory control block 50 through the CPU 10, thereby enabling the necessary image data from the image memory 40. At this moment, receiving the identifier ID through the CPU 10, the memory area management block 51 sets the corresponding lookup table element and the data format element to the lookup table setting block 54 and the data format setting block 55 respectively, on the basis of the pointer set to that image memory element, thereby requesting the reading of the image data. Consequently, the image data is read from the image memory 40 to be supplied to the memory area management block 51 and transferred to the encoder 20 or the decoder 30 through the encoder I/F 57 or the decoder I/F 58.

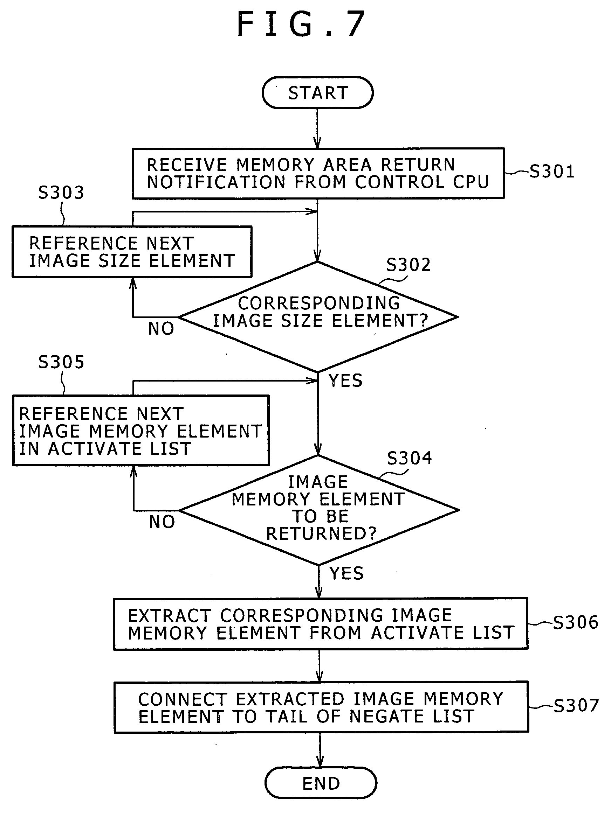

Referring to FIG. 7, there is shown a flowchart indicative of the processing to be executed by the memory area management block 51 when the memory areas are returned from the encoder 20 or the decoder 30.

### (Step S301)

After executing the processing of reading the data for a predetermined picture by the required number of times, the encoder 20 or the decoder 30 supplies the information for returning the corresponding memory areas to the memory control block 50 through the CPU 10. At this moment, the identifier IDs indicative of the memory areas to be returned are transmitted to the memory control block 50. The memory area management block 51 receives the return notification information and the identifier IDs from the CPU 10.

### (Step S302)

The list of image size elements is sequentially referenced from the top thereof to determined whether or not each image size element includes the image size element requested for return. If the image size element is found not including such an image size element, then the procedure goes to step S303; if the image size element is found including such an image size element, then the procedure goes to step S304.

### (Step S303)

The next image size element in the list is referenced to execute the determination of step S302.

### (Step S304)

The activate list of the image size elements being referenced is sequentially referenced from the top thereof to determine whether each referenced image memory element is requested for return. If the referenced image memory element is found not requested for return, then the procedure goes to step S305; if the referenced memory element is found requested for return, then the procedure goes to step S306.

### (Step S305)

The next image memory element in the activate list is referenced to execute the determination of step S304 for each element.

### (Step S306)

The image memory element being referenced is extracted from the activate list. It should be noted that in returning memory areas, the image memory element can be extracted from any position in the activate list. Therefore, at this moment, for the element immediately before the extracted image memory element, the pointer 125 to the next image memory element is updated. In addition, the pointer 115 to the activate_top or the pointer 116 to the activate_tail set to the image size element concerned is updated as required.

### (Step S307)

The extracted image memory element is connected to the tail of the negate list. To be more specific, the pointer 118 to the negate_tail is updated such that this pointer points the newly connected image memory element. If image memory elements have already been connected to the negate list, the pointer of the element connected to the tail pointing the next image memory element is updated such that this pointer points the new image memory element. As required, the pointer 117 to the negate_top is updated.

Thus, the image memory elements corresponding to the memory areas that are not required for reading any further are connected to the negate list, getting in the state ready for storing new image data. It should be noted that each memory area to be deallocated can be selected from any position in the activate list and each selected memory area is connected to the tail of the negate list. Management of the linear lists described above easily allows to take measures if there is a mismatch between the sequence in which image data is written to the image memory and the sequence in which the image data is read therefrom as with the MPEG system for example.

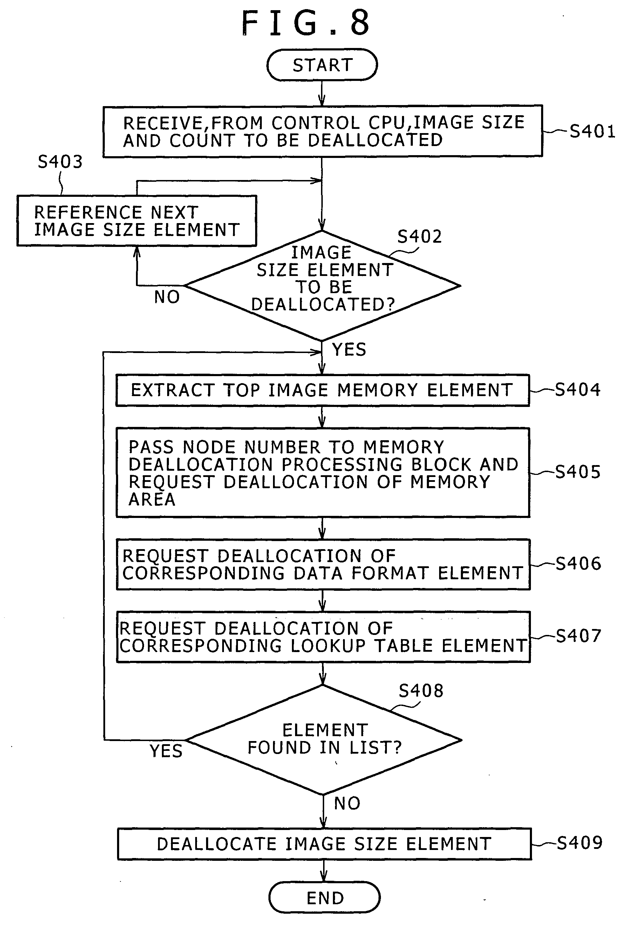

Referring to FIG. 8, there is shown a flowchart indicative of the processing to be executed by the memory area management block 51 in deallocating memory areas.

### (Step S401)

When the host controller instructs the encoder 20 or the decoder 30 to end encoding or decoding or change the image size subject to processing, the information for directing the deallocation of the memory areas used so far in the processing concerned is supplied to the memory control block 50 through the CPU 10. At this moment, the image size and the number of images set in the processing concerned are supplied to the memory control block 50. Receiving the image size and the number of images from the CPU 10, the memory area management block 51 starts executing the following processing.

### (Step S402)

The list of image size elements is sequentially referenced from the top thereof to determine whether each referenced image size element is to be deallocated, or corresponds to the encoder 20 or the decoder 30 that has requested the deallocation of the memory areas. If the element is found not to be deallocated, the procedure goes to step S403; if the element is found to be deallocated, the procedure goes to step S404.

### (Step S403)

The next image size element in the list is referenced to execute the determination of step S402.

### Step S404:

The top image memory element is extracted from the negate list being referenced. To be more specific, the pointer 117 to the negate_top set to the image size element concerned is updated such that this pointer points the next image memory element.

### (Step S405)

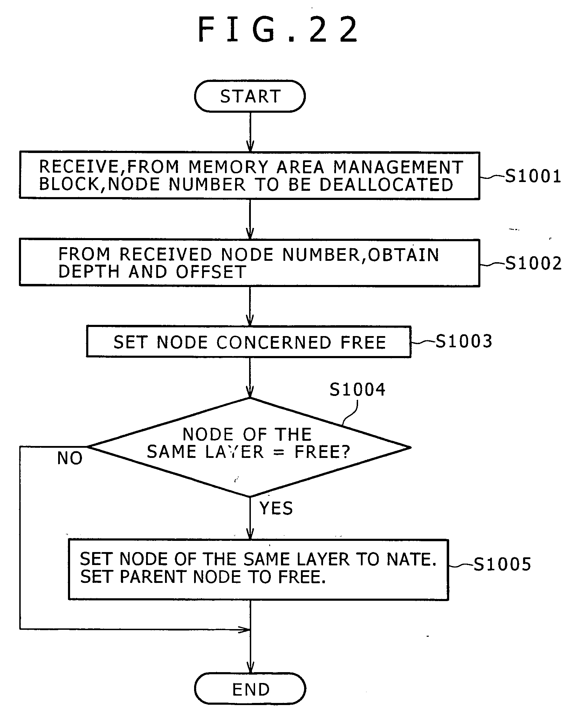

The node number set to the extracted image memory element is passed to the memory deallocation processing block 53, thereby requesting the deallocation of the corresponding memory area. Consequently, the memory deallocation processing block 53 deallocates the memory area in the image memory 40 corresponding to the received node number, which will be described later with reference to FIG. 22.

### (Step S406)

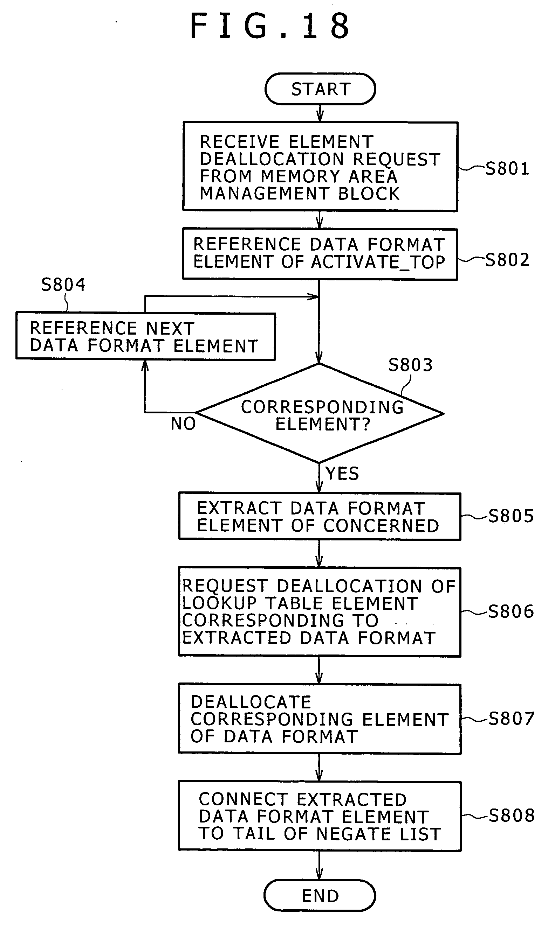

A request is made to the data format setting block 55 for deallocating the data format element pointed by the pointer 124 set to the extracted image memory element. Consequently, the data format setting block 55 deallocates the specified data format element, which will be described later with reference to FIG. 18, and requests the memory area management block 51 to deallocate the corresponding lookup table element .

### (Step S407)

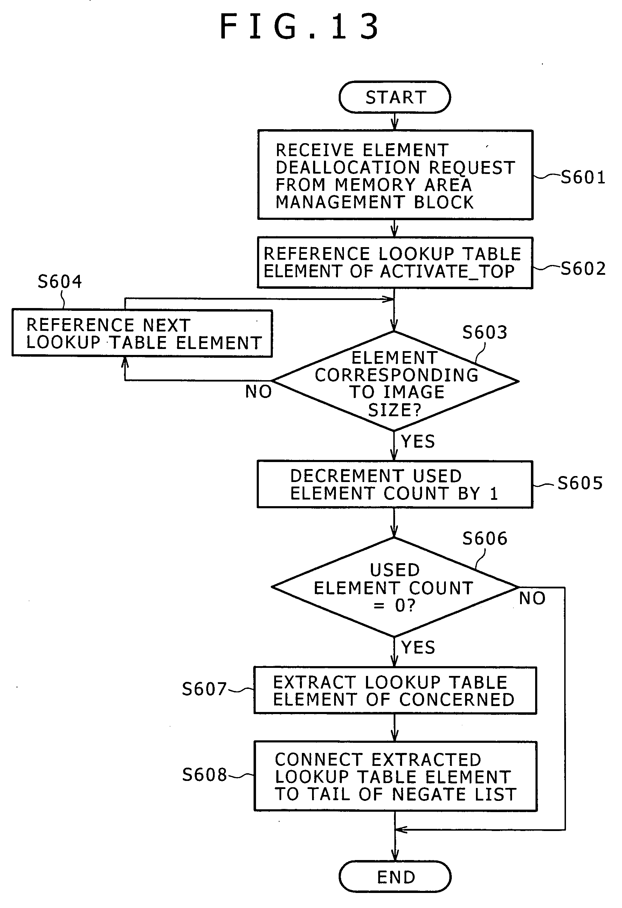

In response to the request from the data format setting block 55, the memory area management block 51 requests the lookup table setting block 54 for deallocating the lookup table element pointed by the pointer 123. Consequently, the lookup table setting block 54 deallocates the specified lookup table element, which will be described later with reference to FIG. 13.

By the processing of above mentioned steps S404 through S407, the memory area corresponding to one image memory element in the negate list is deallocated.

### (Step S408)

Determination is made whether the negate list of the image size element concerned has any image memory element. If an image memory element is found, the procedure returns to step S404 to deallocate the image memory element at the top of the negate list. When all the memory elements have been deallocated and therefore there is no more image memory element in the negate list, the procedure goes to step S409.

### (Step S409)

The image size element concerned is deallocated.

By the above mentioned processing, the memory area allocated for the processing by the encoder 20 or the decoder 30 is deallocated to become newly available.

Operation of the lookup table setting block:

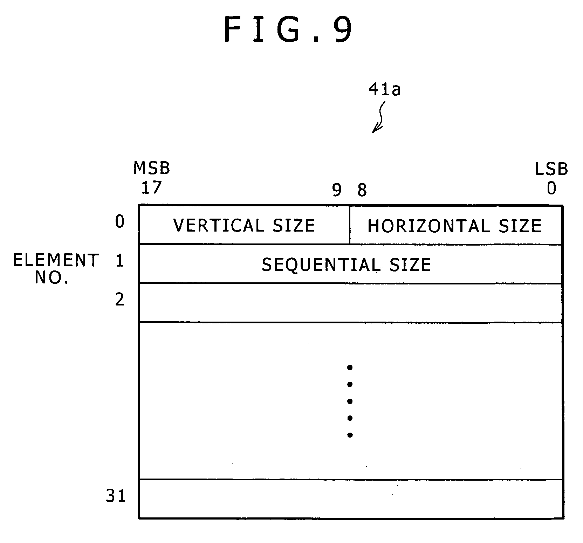

The following describes the operation of the lookup table setting block 54. Referring to FIG. 9, there is shown an exemplary configuration of the lookup table 41a.

As shown in FIG. 9, the lookup table 41a has 32 elements corresponding to the areas mapped to the hardware I/F of the image memory 40. In each element, data of an image size represented one dimensionally or two dimensionally is stored. For example, if the data is represented one dimensionally, the image size is stored as 18 bit data; if the data is represented two dimensionally, the image in vertical direction and the image in horizontal direction are stored as 9 bit data respectively.

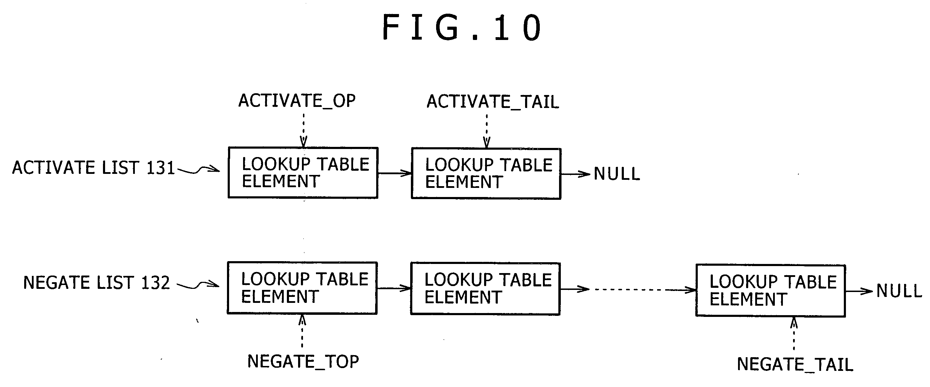

Referring to FIG. 10, there is shown a diagram for describing a method of managing memory areas by the lookup table setting block 54.

The lookup table setting block 54 manages the information of the data size of each memory area by use of lookup table elements. Each lookup table element is managed by two linear lists, an activate list 131 and a negate list 132. To the activate list 131, the lookup table elements that are currently used as memory areas, namely assigned to the allocated memory areas, are connected. To the negate list 132, the lookup table elements in the unused state are connected.

The lookup table elements are prepared in the number equivalent to the number of elements of the lookup table 41a. In the initial state, all lookup table elements are connected to the negate list 132. When the allocation of necessary memory areas is requested at the start of processing by the encoder 20 or the decoder 30, the lookup table element at the top of the negate list 132 is extracted to be connected to the tail of the activate list 131. When the deallocation of the allocated memory areas is requested upon the end of processing by the encoder 20 or the decoder 30, the corresponding lookup table element is extracted from the activate list 131 to be connected to the tail of the negate list 132.

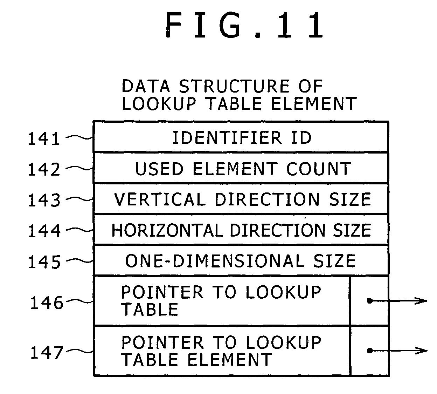

Referring to FIG. 11, there is shown a data structure of each lookup table element.

To each lookup table element, the data shown in FIG. 11 is set by the lookup table setting block 54. An identifier ID 141 is a unique number for identifying each lookup table element. A used element count 142 is indicative of the number of image memory elements that uses the lookup table element concerned. A vertical direction size 143 and a horizontal direction size 144 are indicative of image sizes represented in two dimensional data. A one dimensional size 145 is indicative of an image size represented in one dimensional data.

In addition, in order to make the correlation with the lookup table 41a, a pointer 146 for pointing a corresponding element in the lookup table 41a is set. Further, in order to configure linear lists, a pointer 147 for pointing the lookup table element to be connected next in the same list.

It should be noted that, of the above mentioned pieces of data, the identifier ID 141 and the pointer 146 pointing an element in the lookup table 41a are set beforehand. In the initial state, the used element count 142, the vertical direction size 143, the horizontal direction size 144, and the one dimensional size 145 are set to 0.

In addition, the lookup table setting block 54 manages each list by holding the pointers for pointing the lookup table elements at the top of the activate list 131 (namely, the activate_top) and the tail of the activate list 131 (namely, the activate_tail) and the pointers for pointing the lookup table elements at the top of the negate list 132 (namely, the negate_top) and the tail of the negate list 132 (namely, the negate_tail) in a table, not shown.

The following describes the processing by the lookup table setting block 54. First, referring to FIG. 12, there is shown a flowchart indicative of the processing to be executed by the lookup table setting block 54 in allocating memory areas.

### (Step S501)

During the execution of the memory area allocation processing for encoding or decoding, the image size of the memory area to be allocated is passed from the memory area management block 51 to the lookup table setting block 54 (this step corresponds to step S108 shown in FIG. 5). Receiving this image size, the lookup table setting block 54 starts executing the following processing.

### (Step S502)

The lookup table setting block 54 references the lookup table element at the top of the activate list 131 (namely, the activate_top). It should be noted that, if no lookup table element is connected to the activate list 131, the procedure goes to step S506.

### (Step S503)

The lookup table setting block 54 determines whether the lookup table element being referenced corresponds to the image size supplied from the memory area management block 51. If the lookup table element is found corresponding to the image size, then the procedure goes to step S510; otherwise, the procedure goes to step S504.

### (Step S504)

If the active list 131 has a next lookup table element, the procedure goes to step S505; otherwise, the procedure goes to step S506.

### (Step S505)

The next lookup table element in the activate list 131 is referenced, upon which the procedure returns to step S503. If the lookup table element at the tail of the activate list 131 is found, by the above-mentioned steps S503 through S505, corresponding to the image size supplied from the memory area management block 51, the procedure goes to step S510. If no corresponding lookup table element is found in the activate list 131, the procedure goes to step S506.

### (Step S506)

The lookup table element at the top of the negate list 132 (namely, the negate_top) is extracted and the pointer pointing .the negate_top element is updated such that the pointer points the next element.

### (Step S507)

The extracted lookup table element is connected to the tail of the activate list 131. To be more specific, the pointer 147 pointing the next element and the pointer pointing the activate_tail element which are set to the lookup table element connected so far to the tail of the activate list 131 are updated such that these pointers point the newly connected elements.

### (Step S508)

The image size supplied from the memory area management block 51 is set to the columns of the vertical direction size 143 and the horizontal direction size 144 or the column of the one-dimensional size 145.

### (Step S509)

The image size set in step S508 is set to the element in the lookup table 41a pointed by the pointer 147 set to the lookup table element concerned.

### (Step S510)

The count value of the used element count 142 of the lookup table element concerned is incremented by 1.

### (Step S511)

The identifier ID 141 of the lookup table element concerned is passed to the memory area management block 51. Receiving this identifier ID from the lookup table setting block 54, the memory area management block 51 correlates the image memory element with the lookup table element (this step corresponds to step S109 shown in FIG. 5).

Thus, the lookup table element corresponding to each memory area allocated at the start of the processing by the encoder 20 or the decoder 30 is generated at the tail of the activate list 131. In the present embodiment, use of the count value of the used element count 142 allows the correlation of one lookup table element with a plurality of memory areas (or image memory elements) to which the same image size is set. Consequently, the image size can be efficiently allocated to the lookup table 41a having a limit number of 32 elements.

Referring to FIG. 13, there is shown a flowchart indicative of the processing to be executed by the lookup table setting block 54 when memory areas are deallocated.

### (Step S601)

If the processing by the encoder 20 or the decoder 30 ends, the memory area management block 51 requests, during the deallocation of one image memory element, the lookup table setting block 54 to deallocate the lookup table element corresponding to this image memory element (this step corresponds to step S407 shown in FIG. 8). This request specifies the image size of the memory area to be deallocated, for example. Receiving the request from the memory area management block 51, the lookup table setting block 54 starts the following processing.

### (Step S602)

The lookup table element at the top of the activate list 131 (namely, the activate_top) is referenced.

### (Step S603)

The lookup table setting block 54 determines from the image size setting for example whether the referenced lookup table element is one that has been requested from the memory area management block 51. If the lookup table element is found not the requested one, then the procedure goes to step S604; otherwise, the procedure goes to step S605.

### (Step S604)

The next lookup table element in the activate list 131 is referenced, upon which the procedure goes to step S603.

### (Step S605)

The count value of the used element count 142 set to the lookup table element concerned is decremented by 1.

### (Step S606)

If the count value of the used element count 142 is 0, the procedure goes to step S607; otherwise, the processing ends.

### (Step S607)

The lookup table element concerned is extracted from the activate list 131. At this moment, the pointer pointing the activate_top, the pointer pointing the activate_tail, and the pointer 147 pointing the next element set to the element immediately before the extracted element are updated as required.

### (Step S608)

The extracted lookup table element is connected to the tail of the negate list 132 and the pointer 147 pointing the element next to the element so far connected to the tail of the negate list 132 and the pointer pointing the negate_tail are updated such that these pointers point the newly connected elements.

The above-mentioned processing is executed every time the memory areas (the image memory elements) allocated for the processing executed by the encoder 20 or the decoder 30 are deallocated one by one and the count value of the used element count 142 of the corresponding lookup table element is decremented. When the count value reaches 0, one lookup table element is moved from the activate list 131 to the negate list 132, upon which the setting of the image size for one element in the lookup table 41a is deallocated.

### [Operation of the data format setting block 55]

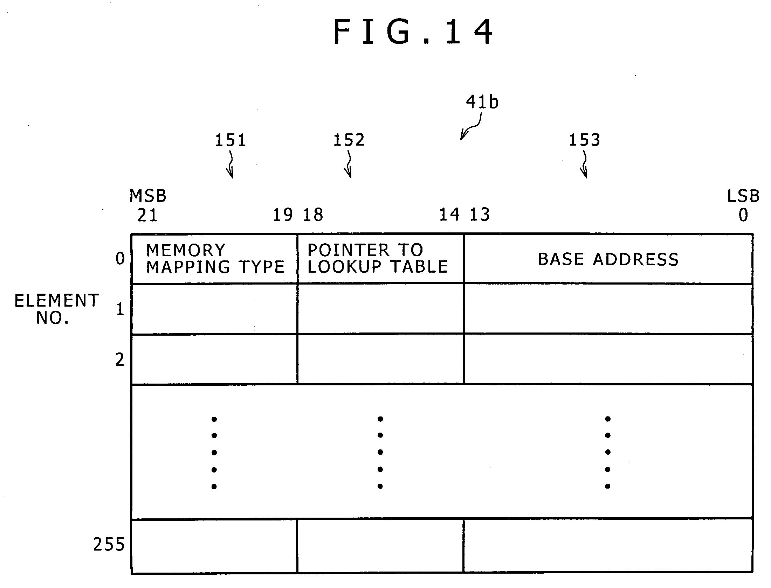

The following describes the operation of the data format setting block 55. Referring to FIG. 14, there is shown an exemplary configuration of the data format 41b.

As shown in FIG. 14, the data format 41b has 256 elements corresponding to the areas mapped to the hardware I/F of the image memory 40. Each of these elements has a memory mapping type 151 indicative of which of one dimension or two dimensions the image size is expressed, a pointer 152 pointing a corresponding element in the lookup table 41a, and a base address 153 indicative of the start address of each corresponding area in the image memory 40. It should be noted that, for the pointer 152 pointing a corresponding element in the lookup table 41a, the identifier ID of a lookup table element corresponding to this element is set.

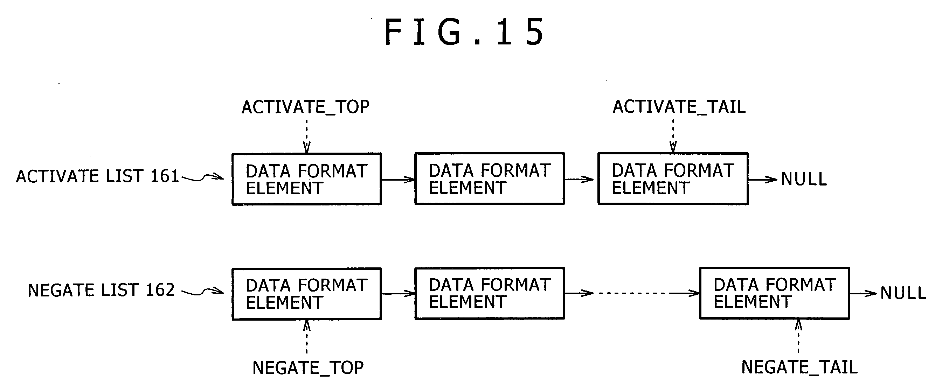

Referring to FIG. 15, there is shown a method of managing memory areas to be executed by the data format setting block 55.

The data format setting block 55 manages the memory area addresses and the information indicative of the correlation with the lookup table 41a by use of data format elements. Each data format element is managed by two linear lists, an activate list 161 and a negate list 162, as shown in FIG. 15. To the activate list 161, the data format elements currently in use as memory areas, namely, the data format elements assigned to the allocated memory areas, are connected. To the negate list 162, the data format elements not in use are connected.

The data format elements are prepared in the number equivalent to the number of elements in the data format 41b. In the initial state, all data format elements are connected to the negate list 162. When a request is made for the allocation of necessary memory areas at starting the processing by the encoder 20 or the decoder 30, the data format elements are extracted from the top of the negate list 162 in the number equivalent to the number of allocated memory areas and the extracted data format elements are connected to the tail of the activate list 161. When the allocated memory areas are deallocated at the end of the processing by the encoder 20 or the decoder 30, all the corresponding elements are sequentially extracted from the activate list 161 to be connected to the tail of the negate list 162.

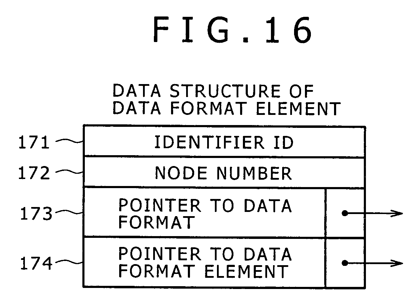

Referring to FIG. 16, there is shown a data structure of each data format element.

To each data format elements, the data as shown in FIG. 16 is set by the data format setting block 55. An identifier ID 171 is a unique number for identifying each data format element, which is set at initialization. A node number 172 is indicative of the node number of a binary tree structure that is outputted from the memory allocation processing block 52 at the allocation of memory areas.

In addition, a pointer 173 is set for pointing a corresponding element in the data format 41b so as to make correlation with the data format 41b. Further, in order to configure the linear lists, a pointer 174 pointing the data format element to be connected next in the same list is set.

In addition, the data format setting block 55 manages each list by holding the pointers for pointing the data format elements at the top of the activate list 161 (namely, the activate_top) and the tail of the activate list 161 (namely, the activate_tail) and the pointers for pointing the data format elements at the top of the negate list 162 (namely, the negate_top) and the tail of the negate list 162 (namely, the negate_tail) in a table, not shown.

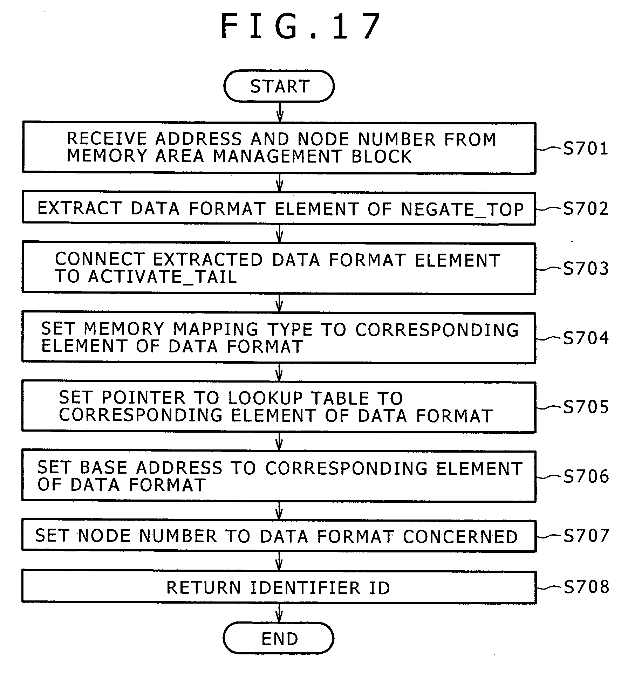

The following describes the processing to be executed by the data format setting block 55. Referring to FIG. 17, there is shown a flowchart indicative of the processing to be executed by the data format setting block 55 in allocating memory areas.

### (Step S701)

During the execution of memory area allocation for encoding or decoding, the data format setting block 55 receives a request from the memory area management block 51 for deallocating the corresponding data format element in the memory area to be deallocated (this step corresponds to step S110 shown in FIG. 5), thereby executing the following processing. It should be noted that, at this moment, the start address of each memory area to be allocated, the node number, the identifier ID of the corresponding lookup table element, and the memory mapping type based on the image size are supplied from the memory area management block 51 to the data format setting block 55.

### (Step S702)

The data format element at the top of the negate list 162 (namely the negate_top) is extracted and the pointer pointing the negate_top element is updated such that this pointer points the next element.

### (Step S703)

The extracted data format element is connected to the tail of the activate list 161 (namely the activate_tail). To be more specific, the pointer 174 pointing the next element set to the data format element connected to the tail of the activate list 161 and the pointer pointing the activate_tail element are updated such that these pointers point the newly connected elements.

### (Step S704)

The memory mapping type received from the memory area management block 51 is set to the element of data format 41b pointed by the pointer 173 set to the data format element concerned.

### (Step S705)

The pointer pointing the corresponding element in the lookup table 41a is set to the corresponding element in the data format 41b pointed by the pointer 173. For this value, the identifier ID of the lookup table element received from the memory area management block 51 is set. It should be noted that this identifier ID may be obtained by enquiring the lookup table setting block 54 through the memory area management block 51 outside this flowchart, namely, in step S705 for example.

### (Step S706)

The start address received from the memory area management block 51 is set to the corresponding element in the data format 41b pointed by the pointer 173.

### (Step S707)

The node number received from the memory area management block 51 is set to the column of the node number 172 of the data format element concerned.

### (Step S708)

The identifier ID 171 of the data format element concerned is passed to the memory area management block 51. Receiving this identifier ID, the memory area management block 51 correlates the image memory element with the data format element (this step corresponds to step S111 shown in FIG. 5).

Thus, the data format elements corresponding to the allocated memory areas are sequentially generated at the tail of the activate list 161 at the starting of the processing by the encoder 20 or the decoder 30.

Referring to FIG. 18, there is shown a flowchart indicative of the processing to be executed by the data format setting block 55 in the deallocation of memory areas.

### (Step S801)

If the processing by the encoder 20 or the decoder 30 ends, the memory area management block 51 requests, during deallocating one image memory element, the data format setting block 55 to deallocate the data format element corresponding to the that image memory element (this step corresponds to step S406 shown in FIG. 8). This request specifies the setting value (namely, the identifier ID) of the pointer 124 held in the memory area (or the image memory element) to be deallocated, for example. In response to the request from the memory area management block 51, the data format setting block 55 starts the following processing.

### (Step S802)

The data format element at the top of the activate list 161 (namely, the activate_top) is referenced.

### (Step S803)

The data format setting block 55 determines from the identifier ID whether the referenced data format element is an element corresponding to the request from the memory area management block 51. If the referenced data format element is found corresponding to the request, the procedure goes to step S804; otherwise, the procedure goes to step S805.

### (Step S804)

The next data format element in the activate list 161 is referenced, upon which the procedure goes to step S803.

### (Step S805)

The data format element concerned is extracted from the activate list 161. At this moment, the pointer pointing the activate_top, the pointer pointing the activate_tail, and the pointer 174 pointing the next element set to the element immediately before the extracted element are updated as required.

### (Step S806)

The data format setting block 55 requests the memory area management block 51 to deallocate the lookup table element corresponding to the extracted data format element. In response, the memory area management block 51 specifies the identifier ID of the corresponding lookup table element to request the lookup table setting block 54 to deallocate this element (this step corresponds to step S407 shown in FIG. 8). In response to this request, the lookup table setting block 54 executes the deallocation of the lookup table element shown in FIG. 13.

### (Step S807)

The setting value of the element in the data format 41b correlated with the data format element concerned is cleared to deallocate this element.

### (Step S808)

The data format element concerned is connected to the tail of the negate list 162 and the pointer 174 pointing the element next to the element so far connected to the tail of the negate list 162 and the pointer pointing the negate_tail are updated such the these pointes point the newly connected elements.

The above-mentioned processing is executed every time the memory areas (the image memory elements) allocated for the processing executed by the encoder 20 or the decoder 30 are deallocated one by one and the corresponding data format elements are sequentially moved from the activate list 161 to the negate list 162, thereby clearing the settings such as the address of one element in the data format 41b.

### [Operations of the memory allocation processing block 52 and the memory deallocation processing block 53]

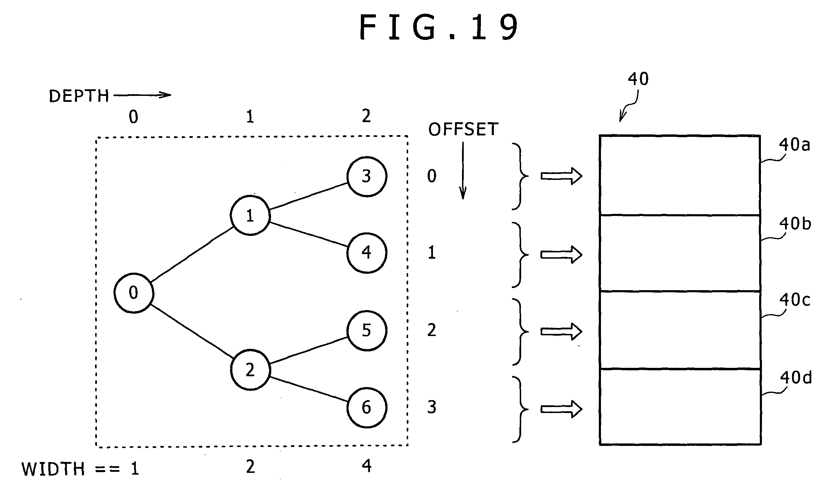

Referring to FIG. 19, there is shown a method of memory allocation to be executed by the memory allocation processing block 52 and the memory deallocation processing block 53.

The memory allocation processing block 52 and the memory deallocation processing block 53 manage the memory allocation by assigning a unit area obtained by dividing the storage area of the image memory 40 by a power of 2 to the deepest node of the binary tree structure. The nodes other than the deepest each includes all unit areas assigned to its child node. The memory allocation processing block 52 and the memory deallocation processing block 53 holds the start addresses of the unit areas and specify nodes, thereby outputting the start address of each unit area corresponding to the specified node.

In the example shown in FIG. 19, the image memory 40 is divided into four unit areas, 40a through 40d, for the brevity of description. By use of a binary tree structure consisting of seven nodes, the unit areas 40a through 40d are assigned to the deepest nodes "3" through "6".

For the allocation and deallocation of memory areas, values of the layer depth of the binary tree structure, the offset indicative of the sequence of nodes in the same layer, and the width indicative of the number of nodes in the same layer are used. In the example shown in FIG. 19, node "1" of layer depth "1" includes unit areas 40a and 40b and node "2" includes unit areas 40c and 40d. Node "0" of depth "0" includes unit areas 40a through 40d.

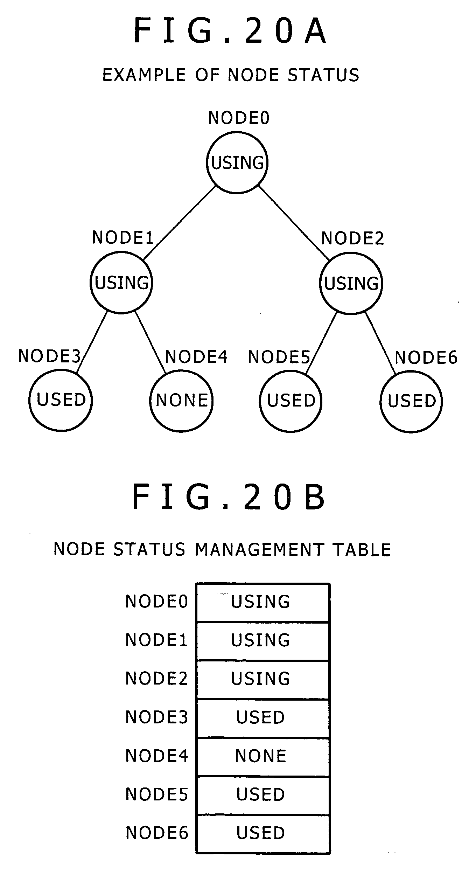

Referring to FIGS. 20A and 20B, there is shown a binary tree structured node management method to be executed by the memory allocation processing block 52 and the memory deallocation processing block 53.

The use of unit areas is managed by the state of each node (or the node status) in the binary tree structure. The node status is "NONE" when unit area corresponding to that node is not in use (the not allocated state), "USED" when the unit area corresponding to that node is in use (the allocated state), "USING" when the child node of that node is in use, or "FREE" when that node or its child node is being deallocated.

The node status of each node is managed by the memory allocation processing block 52 and the memory deallocation processing block 53 by use of a common node status management table. For example, in the binary tree structure shown in FIG. 19, if the nodes are in the states as shown in FIG. 20A, the node status management table is set as shown in FIG. 20B. The node status management table is held in the memory area management block 51 and set or referenced in the processing shown in FIGS. 21 and 22 by the memory allocation processing block 52 and the memory deallocation processing block 53.

Referring to FIG. 21, there is shown a flowchart indicative of the processing to be executed by the memory allocation processing block 52 in allocating memory areas.

### (Step S901)

During allocating memory areas for encoding or decoding, the image size of the memory area to be allocated is passed from the memory area management block 51 to the memory allocation processing block 52 (this step corresponds to step S105 shown in FIG. 5). Receiving this image size, the memory allocation processing block 52 starts the following processing.

### (Step S902)

The node of depth "0" is referenced.

### (Step S903)

The memory allocation processing block 52 determines whether or not the data size corresponding to the image size specified by the memory area management block 51 is smaller than the data size of the memory area included in the node being referenced. If the former data size is found smaller, the procedure goes to step S904; otherwise, the procedure goes to step S905.

### (Step S904)

One is added to the value of layer depth and the layer of the node to be referenced is lowered by one.

### (Step S905)

Subtract 1 from the value of layer depth to be referenced. Consequently, the layer suitable to the image size to be allocated is selected. Then, the layer width of the current layer is set with the offset value of the node to be referenced being "0".

### (Step S906)

The memory allocation processing block 52 determines whether or not the offset value is smaller than the layer width value. If the offset value is found smaller, the procedure goes to step S907; otherwise, the procedure goes to step S909.

### (Step S907)

The memory allocation processing block 52 determines whether or not the node status of the node being referenced is "NONE". If the node status is found to be "NONE", then the procedure goes to step S910; otherwise, the procedure goes to step S908.

### (Step S908)

Because the node being referenced is in use or in being deallocated, 1 is added to the offset value and the next node in the same layer is referenced. Then, the procedure returns to step S906. In step S906, if the offset value is found higher than the layer width and all nodes in the same layer are found in use, then the procedure goes to step S909.

### (Step S909)

One is subtracted from the layer depth and the node of one layer up is referenced. Then, the layer width of the current layer is set with the offset value "0", upon which the procedure returns to step S906.

### (Step S910)

The node being referenced is put in node status "USED" and the node status of its parent node is put in "USING".

### (Step S911)

The node number of the node being referenced is returned to the memory area management block 51.

### (Step S912)

The start address of the memory area included in the node concerned is returned to the memory area management block 51.

Thus, the minimum necessary memory areas for storing the image data having the specified image size are allocated. By the processing of steps S911 and S912, the memory area management block 51 receives the node number corresponding to each allocated memory area and the start address of that area (step S106 shown in FIG. 5) .

Referring to FIG. 22, there is shown a flowchart indicative of the processing to be executed by the memory deallocation processing block 53 in deallocating memory areas.

### (Step S1001)

If the processing by the encoder 20 or the decoder 30 ends, the memory area management block 51 passes the node number corresponding to one image memory element to the memory deallocation processing block 53 to request the deallocation of that memory area (this step corresponds to step S405 shown in FIG. 8). Receiving the node number, the memory deallocation processing block 53 starts the following processing.

### (Step S1002)

The depth of the layer corresponding to the received node number and the offset value are obtained.

### (Step S1003)

The node status of the node corresponding to the obtained layer depth and offset is set to "FREE".

### (Step S1004)

If the node status of another node in the same layer having the same parent node is "FREE", then the procedure goes to step S1005; otherwise, the processing ends.

### (Step S1005)

The node status of another node in the same layer having the same parent node is set to "NONE" and the node status of that parent node is set to "FREE".

Thus, the memory area corresponding to one allocated image memory element is deallocated. Then, after the deallocation of all image memory elements in one image size element, the node status of the node set to "FREE" in steps S1004 and S1005 above is set to "NONE", thereby making each deallocated memory area available. [Effects of the first embodiment]

As described above and according to the image processing apparatus practiced as the first embodiment of the invention, the setting of the image size in one of the encoder 20 and the decoder 30 can be made without stopping the processing of the other. For example, if it is assumed that the this image processing apparatus be installed in a digital video camera, a taken moving image data is encoded by the encoder 20 to be recorded to a recording medium such as magnetic tape. An encoded stream of moving image data read from a recording medium is decoded by the decoder 30 to be displayed on the display block.

It is also assumed that an encoded stream of moving image data recorded to a magnetic tape be re-encoded with its image size reduced and the resultant moving image data be recorded to a memory card or transmitted to an external device via a network. In this case, an encoded data stream read from the magnetic tape is decoded by the decoder 30 and then encoded by the encoder 20 with a different image size. In this processing, the present embodiment is able to change the image size at the time of encoding by the encoder 20 with the decode processing by the decoder 30 kept executed on the encoded stream data read from the magnetic tape.

Further, if it is assumed that encoded streams of moving image data having different image sizes be prepared in a memory card, which are re-encoded to be transmitted to an external device via a network. In this case, the present embodiment is able to read the encoded streams continuously from the memory card to be decoded by the decoder 30 to be supplied to the encoder 20 with the encoding by the encoder 20 with a constant image size kept going on.

The above-mentioned effects of the invention are obtained mainly by the processing by the memory allocation processing block 52 and the memory deallocation processing block 53 for allocating and deallocating memory areas by use of a binary tree structure and the processing by the memory area management block 51 for managing the use status of the allocated memory areas in a unified manner by use of linear lists. Namely, the memory allocation processing block 52 and the memory deallocation processing block 53 are able to efficiently allocate, from the free area in the image memory 40, the minimum necessary memory areas for storing the image data for one picture in encoding and decoding operations by use of a binary tree structure.

In addition, the memory area management block 51 requests the memory allocation processing block 52 for the allocation of memory areas necessary for encoding and decoding, for each picture discretely, and manages the use status of the memory areas, so that the memory areas to be used by the encoder 20 or the decoder 30 are actually allocated in a scattered manner in the image memory 40, not in a fixed manner. This configuration allows the deallocation of only those areas that are required no more and the easy reuse of the deallocated areas as free areas, thereby flexibly coping with the image size change during the processing of the encoder 20 and decoder 30.

Further, the encoder 20 and the decoder 30 are able to easily read and write data with the image memory 40 by use of only the identifier ID of each image memory element received from the memory area management block 51 without the necessity for recognizing the specifications and physical addresses of the image memory 40. This configuration significantly reduces the circuit scale and manufacture cost of the encoder 20 and the decoder 30.

Still further, the lookup table setting block 54 and the data format setting block 55 execute the necessary settings in accordance with the hardware I/F of the image memory 40 so as to make the allocated memory areas available, so that, if a change in the specifications of the image memory 40 occurs, changing only the processing procedure of these functional blocks provides flexible system change.

### [Second and third embodiments]

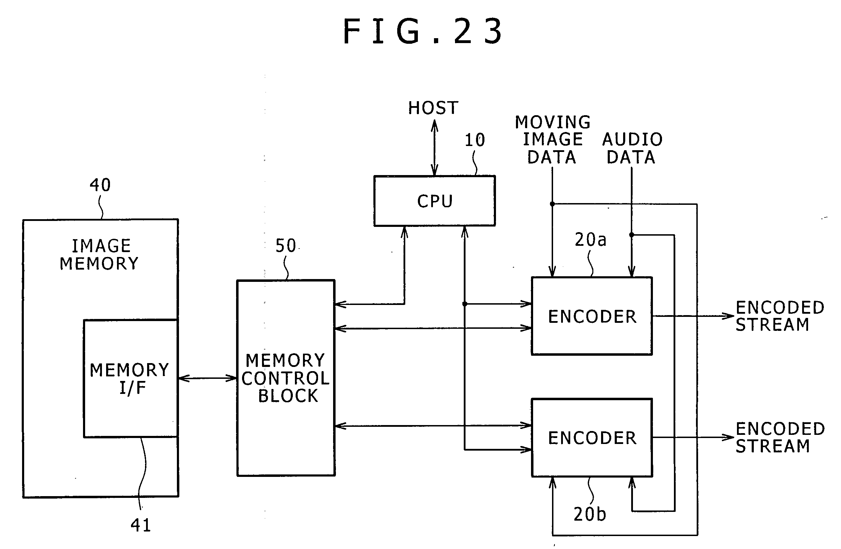

Referring to FIG. 23, there is shown a block diagram illustrating an exemplary configuration of the main portion of an image processing apparatus practiced as a second embodiment of the invention.

In the image processing apparatus shown in FIG. 23, encoding can be concurrently executed by two encoders 20a and 20b. For example, the same moving image data such as taken image data and the same audio data are supplied to the two encoders 20a and 20b to make these encoders encode the supplied data with different image sizes, one encoded stream being recorded to a magnetic tape, while the other encoded stream being recorded to another type of recording medium such as a memory card or transmitted to an external device via a network.

As with the first embodiment, the encoder 20a and 20b access the image memory 40 through the memory control block 50 in the image processing apparatus shown in FIG. 23. This configuration allows the changing of the image size with one encoding operation suspended while continuing the other encoding operation, thereby restarting encoding.

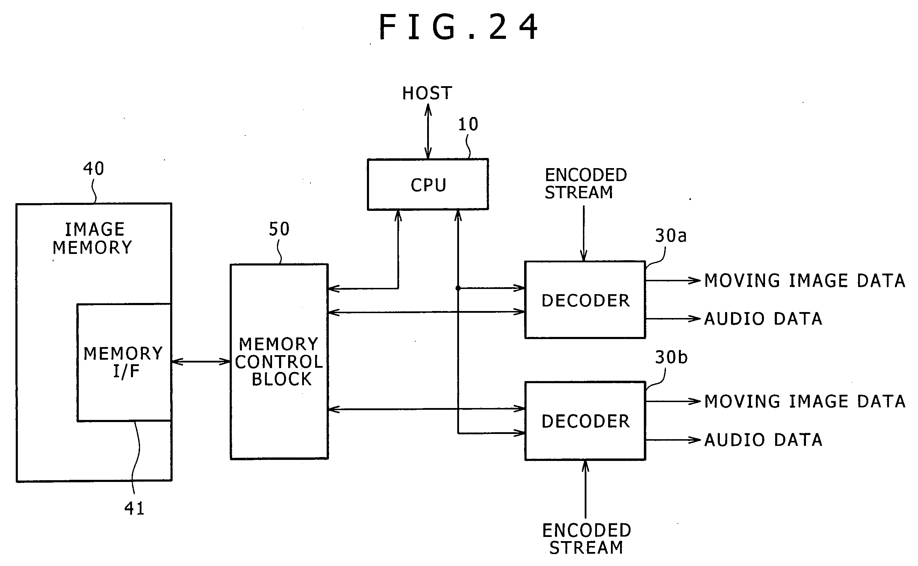

Referring to FIG. 24, there is shown a block diagram illustrating an exemplary configuration of the main portion of an image processing apparatus practiced as a third embodiment of the invention.

In the image processing apparatus shown in FIG. 24, decoding is concurrently executed by two decoders 30a and 30b. For example, different encoded streams are supplied to the two decoders 30a and 30b to concurrently execute the decoding and the moving image data outputted from these decoders are combined to be displayed on one screen.

As with the first embodiment, the decoders 30a and 30b access the image memory 40 through the memory control block 50 in the image processing apparatus shown in FIG. 24. This configuration allows the changing of the image size with one encoding operation suspended while continuing the other encoding operation, thereby restarting decoding.

The present invention is also applicable to the execution of the image processing of two or more lines by sharing the same image memory, in addition to the encoding and decoding of moving image data. Such image processing includes image zoom-in and zoom-out, image synthesizing, and picture quality correction, for example. Further, application of the present invention to the image processing of one line also brings about the effects that the configuration of the image processing engine is simplified independently of image memory specifications.

The present invention is especially suitable for the case where the processing such as image processing and the management of access to the image memory is executed by an embedded system with no OS installed. However, it is also practicable to apply the present invention to an embedded system with a general-purpose OS installed. In this case, a processing program equivalent to the memory control block 50 is executed on the general-purpose OS and, because this program is dedicated to image memory management, this program provides better performance than the image memory management processing by the general-purpose OS.

The processing functions of the memory control block 50 shown in each of the above-mentioned embodiments of the invention can be realized by use of a computer. In this case, a program in which the processing contents of the functions to be provided by the memory control block 50 are coded is provided. Executing this program on a computer realizes the above-mentioned processing functions on the computer. The program coded with processing contents can be recorded to computer-readable recording media. Such recording media include magnetic recording device, optical disk, magneto-optical recording media, and semiconductor memory, for example.

The above-mentioned program is distributed by recording the program to a portable recording medium based on semiconductor memory for example and this portable recording medium is marketed. It is also practicable to store the program in a server computer on a network and transfer the stored program to other computers.

A computer on which the program is executed stores the program from the portable recording media or the server computer into the computer's storage unit. Then, the computer reads the program from the storage unit and executes processing as instructed by the program. It is also practicable that the computer can read the program directly from the portable recording media and execute the program without storing the program in the computer's storage unit.

While a preferred embodiment of the present invention has been described using specific terms, such description is for illustrative purpose only, and it is to be understood that changes and variations may be made without departing from the spirit or scope of the following claims.

## Claims

1. A memory management method for sharing one image memory as a work area by a plurality of image processing section to concurrently execute processing operations by said plurality of image processing section, comprising:
memory area allocating step in which a memory area allocating section receives information about an image size and an image count that are individually specified for processing operations to be executed by said plurality of image processing section, allocates memory areas corresponding to said image size to a free area in said image memory by said image count, and outputs an address indicative of said allocated image area;
memory area information generating step in which a memory area managing section generates memory area information in which a correlation between identification information of each of said memory areas allocated in said memory area allocating step and access information for accessing each of said memory areas, said access information at least including said address, is stored for each of said memory areas; and
memory area managing step in which said memory area managing section receives requests from each of said plurality of image processing section for using and returning each of said memory areas to manage a use status of each of said memory areas on the basis of said memory area information.

2. The memory management method according to claim 1, further comprising:
memory area deallocating step in which, when the processing by said image processing section is suspended, said memory area managing section sets said memory areas allocated for the processing by said image processing section to free areas again and deletes said memory area information.

3. The memory management method according to claim 1, wherein said memory area managing step manages, for each of said plurality of image processing section, a use status of each of said memory areas by use of a first linear list including said memory area information corresponding to each of said memory areas in use by said image processing section and a second linear list including said memory area information corresponding to each of said memory area not in use.

4. The memory management method according to claim 3, wherein said memory area information generating step includes a step in which said memory area information corresponding to each of said memory area allocated in said memory area allocating step is sequentially connected to said second linear list; and
said memory area managing step includes a step in which, when said request for using comes from said image processing section, said memory area information at top of said second linear list is extracted, the extracted memory area information is connected to tail of said first linear list, and an identification number for identifying said memory area information is outputted to said requesting image processing section.

5. The memory management method according to claim 4, wherein said memory area managing step further comprising a step in which, when said request for returning with said identification number specified comes from said image processing section, said memory area information corresponding to said specified identification number is extracted from said first linear list and said extracted memory area information is connected to tail of said second linear list.

6. The memory management method according to claim 5, further comprising memory deallocating step in which, when processing by said image processing section is suspended, said memory area managing section deletes said corresponding memory area information from said second linear list and sets said memory area corresponding to said memory area information to a free area.

7. The memory management method according to claim 1, wherein, when a request for accessing said image memory with said memory area specified comes from said image processing section, said memory area managing step accesses said image memory by use of said access information correlated by said memory area information corresponding to said specified memory area and transfers image data between said specified memory area and said requesting image processing section.

8. The memory management method according to claim 1, wherein said memory area allocating step manages a unit memory area in said image memory by correlating said unit memory area with a node at a bottom layer of a binary tree structure and, when said image size is specified, extracts a node from said binary tree structure in which one or more of unit memory areas that can store image data equivalent to said specified image size are correlated with a child node at bottom of said binary tree structure, and outputs a node number indicative of said extracted node to said memory area managing section, thereby allocating said memory area corresponding to said specified image size; and
said memory area managing step stores said node number outputted in said memory area allocating step into said memory area information.

9. The memory management method according to claim 1, wherein said memory area allocating step outputs a start address of said memory area as said address indicative of said allocated memory area; and
said access information includes said start address and an image size corresponding to said memory area indicated by said start address.

10. An image processing apparatus for sharing one image memory as a work area by a plurality of image processing section to concurrently execute processing operations by said plurality of image processing section, comprising:
memory area allocating section for receiving information about an image size and an image count that are individually specified for processing operations to be executed by said plurality of image processing section, allocating memory areas corresponding to said image size to a free area in said image memory by said image count, and outputting an address indicative of said allocated image area; and
memory area managing section for holding memory area information in which a correlation between identification information of each of said memory areas allocated by said memory area allocating section and access information for accessing each of said memory areas, said access information at least including said address, is stored for each of said memory areas, and receiving requests for using and returning of each of said memory areas from each of said plurality of image processing section, thereby managing a use status of each of said memory areas.

11. The image processing apparatus according to claim 10, wherein, when the processing by said image processing section is suspended, said memory area managing section outputs a request for deallocating said memory area allocated for the processing to be executed by said image processing section to delete said memory area information; and
receiving said deallocation request from said memory area managing section, said memory area allocating section sets said corresponding memory area to a free area again.

12. The image processing apparatus according to claim 10, wherein said memory area managing section manages, for each of said plurality of image processing section, a use status of each of said memory areas by use of a first linear list including said memory area information corresponding to each of said memory areas in use by said image processing section and a second linear list including said memory area information corresponding to each of said memory area not in use.

13. The image processing apparatus according to claim 12, wherein said memory area managing section sequentially connects said memory area information corresponding to each of said memory area allocated in said memory area allocating section to said second linear list and, when said request for using comes from said image processing section, extracts said memory area information at top of said second linear list, connects the extracted memory area information to tail of said first linear list, and outputs an identification number for identifying said memory area information to said requesting image processing section.

14. The image processing apparatus according to claim 13, wherein said memory area managing section, when said request for returning with said identification number specified comes from said image processing section, extracts said memory area information corresponding to said specified identification number from said first linear list and connects said extracted memory area information to tail of said second linear list.

15. The image processing apparatus according to claim 14, wherein, when processing by said image processing section is suspended, said memory area managing section outputs a request for deallocating said memory area corresponding to said memory area information in said second linear list to said memory area allocating section to delete said memory area information and,
in response to said request for deallocation from said memory area managing section, said memory area allocating section sets corresponding memory area to a free area.

16. The image processing apparatus according to claim 10, wherein, receiving a request for accessing said image memory specified with said memory area from said image processing section, said memory area managing section accesses said memory area by use of said access information correlated by said memory area information corresponding to said specified memory area and transfers image data between said specified memory area and said requesting image processing section.

17. The image processing apparatus according to claim 10, wherein said memory area allocating section manages a unit memory area in said image memory by correlating said unit memory area with a node at a bottom layer of a binary tree structure and, when said image size is specified, extracts a node from said binary tree structure in which one or more of unit memory areas that can store image data equivalent to said specified image size are correlated with a child node at bottom of said binary tree structure, and outputs a node number indicative of said extracted node to said memory area managing section, thereby allocating said memory area corresponding to said specified image size; and
said memory area managing section stores said node number outputted in said memory area allocating section into said memory area information.

18. The image processing apparatus according to claim 10, wherein said memory area allocating section outputs a start address of said memory area as said address indicative of said allocated memory area; and
said access information includes said start address and an image size corresponding to said memory area indicated by said start address.

19. A memory management program for making a computer execute memory management processing for concurrently executing processing operations by a plurality of image processing section by sharing one image memory as a work area, said memory management program comprising:
memory area allocating step which receives information about an image size and an image count that are individually specified for processing operations to be executed by said plurality of image processing section, allocates memory areas corresponding to said image size to a free area in said image memory by said image count, and outputs an address indicative of said allocated image area;
memory area information generating step which generates memory area information in which a correlation between identification information of each of said memory areas allocated in said memory area allocating step and access information for accessing each of said memory areas, said access information at least including said address, is stored for each of said memory areas; and
memory area managing step which receives requests from each of said plurality of image processing section for using and returning each of said memory areas to mange a use status of each of said memory areas on the basis of said memory area information.
